(19) Europäisches Patentamt
European Patent Office
Office européen des brevets

(11) **EP 4 645 734 A1**

(12) **EUROPEAN PATENT APPLICATION**
published in accordance with Art. 153(4) EPC

(43) Date of publication:
**05.11.2025 Bulletin 2025/45**

(21) Application number: **23910481.3**

(22) Date of filing: **25.12.2023**

(51) International Patent Classification (IPC):
**H04L 5/00** (2006.01)   **H04W 72/04** (2023.01)

(52) Cooperative Patent Classification (CPC):
**H04B 1/713; H04L 5/00; H04W 36/06; H04W 64/00; H04W 72/04; H04W 72/0446**

(86) International application number:
**PCT/CN2023/141511**

(87) International publication number:
**WO 2024/140555 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022  CN 202211686605**

(71) Applicant: **Vivo Mobile Communication Co., Ltd.**
**Dongguan, Guangdong 523863 (CN)**

(72) Inventors:
• **SI, Ye**
  **Dongguan, Guangdong 523863 (CN)**
• **WANG, Yuanyuan**
  **Dongguan, Guangdong 523863 (CN)**
• **LIU, Shixiao**
  **Dongguan, Guangdong 523863 (CN)**

(74) Representative: **Shieldmark**
**P.O. Box 90471**
**2509 LL The Hague (NL)**

(54) **TRANSMISSION METHOD FOR POSITIONING REFERENCE SIGNAL RESOURCE, AND COMMUNICATION DEVICE**

(57)    This application discloses a method for transmitting a positioning reference signal resource, and a communication device, belonging to the technical field of communications. The method for transmitting the positioning reference signal resource in an embodiment of this application includes: sending or receiving, by a communication device, a positioning reference signal resource, symbols occupied by the positioning reference signal resource within a slot including at least one symbol group, each symbol group including one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops.

300

A communication device sends or receives a positioning reference signal resource, symbols occupied by the positioning reference signal resource within a slot including at least one symbol group, each symbol group including one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than frequency hopping switching time

~S302

FIG. 3

**Description**

**CROSS-REFERENCE TO RELATED APPLICATIONS**

This application claims priority to Chinese Patent Application No. 202211686605.1, filed with the China National Intellectual Property Administration on December 27, 2022 and entitled "METHOD FOR TRANSMITTING POSITIONING REFERENCE SIGNAL RESOURCE, AND COMMUNICATION DEVICE", which is incorporated herein by reference in its entirety.

**TECHNICAL FIELD**

This application belongs to the technical field of communications, and specifically relates to a method for transmitting a positioning reference signal resource, and a communication device.

**BACKGROUND**

A Reduced Capability (Reduced Capability, RedCap) terminal is a terminal that can meet the requirements of low complexity and low cost. In some communication scenarios, it is usually necessary to position the RedCap terminal. When positioning a terminal, bandwidth is an important factor that influences positioning accuracy. However, for the RedCap terminal, due to limited capability, its supported bandwidth is much smaller than that of an ordinary terminal (the RedCap terminal only supports a maximum bandwidth of 20 M in FR1 and 100 M in FR2, while the ordinary terminal supports a maximum bandwidth of 100 MHz in FR1 and 400 MHz in FR2). Therefore, when positioning the RedCap terminal, since its supported bandwidth is relatively small, the positioning accuracy is relatively low. In order to improve the positioning accuracy of the RedCap terminal, it is necessary to increase the effective bandwidth of the RedCap terminal. However, there is currently a lack of an effective technical solution to achieve this purpose.

**SUMMARY**

Embodiments of this application provide a method for transmitting a positioning reference signal resource, and a communication device, which can solve the problem of low positioning accuracy caused by small bandwidth supported by RedCap terminals during positioning at present.

According to a first aspect, provided is a method for transmitting a positioning reference signal resource. The method includes: sending or receiving, by a communication device, a positioning reference signal resource, symbols occupied by the positioning reference signal resource within a slot including at least one symbol group, each symbol group including one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops.

According to a second aspect, provided is an apparatus for transmitting a positioning reference signal resource. The apparatus includes: a transmission module, configured to send or receive a positioning reference signal resource, symbols occupied by the positioning reference signal resource within a slot including at least one symbol group, each symbol group including one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops.

According to a third aspect, provided is a communication device. The communication device includes a processor and a memory, the memory storing a program or instruction runnable on the processor, the program or instruction, when executed by the processor, implementing the steps of the method according to the first aspect.

According to a fourth aspect, provided is a communication device, including a processor and a communication interface, the communication interface being configured to send or receive a positioning reference signal resource, symbols occupied by the positioning reference signal resource within a slot including at least one symbol group, each symbol group including one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops.

According to a fifth aspect, provided is a readable storage medium, the readable storage medium storing a program or instruction, the program or instruction, when executed by a processor, implementing the steps of the method according to the first aspect.

According to a sixth aspect, provided is a chip. The chip includes a processor and a communication interface, the communication interface being coupled to the processor, the processor being configured to run a program or instruction to implement the method according to the first aspect.

According to a seventh aspect, provided is a computer program/program product, the computer program/program product is stored in a storage medium, and the computer program/program product, when executed by at least one processor, implements the steps of the method for transmitting the positioning reference signal resource according to the first aspect.

In the embodiments of this application, when sending or receiving a positioning reference signal resource for terminal positioning, symbols occupied by the positioning reference signal resource within a slot include at least one symbol group, and each symbol group includes one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops. In this way, since positioning reference signals can be sent or received through a hopping transmission manner, the effective bandwidth of the positioning reference signal can be improved, thus improving the positioning accuracy. In addition, since there are gap symbols between adjacent symbol groups occupied by the positioning reference signal resource within the slot, and the length of the gap symbols is not less than the switching time between hops, it can also facilitate radio frequency retuning between different hops, thus ensuring the effective transmission of the positioning reference signal resource.

## BRIEF DESCRIPTION OF THE DRAWINGS

FIG. 1(a) is a schematic diagram of a configuration and pattern of relative RE offsets in existing protocols;

FIG. 1(b) is a schematic diagram of a configuration and pattern of relative RE offsets in existing protocols;

FIG. 1(c) is a schematic diagram of a configuration and pattern of relative RE offsets in existing protocols;

FIG. 1(d) is a schematic diagram of a configuration and pattern of relative RE offsets in existing protocols;

FIG. 2 is a schematic diagram of a wireless communication system according to an embodiment of this application;

FIG. 3 is a schematic flowchart of a method for transmitting a positioning reference signal resource according to an embodiment of this application;

FIG. 4(a) is a schematic diagram of a configuration and pattern of relative RE offsets according to an embodiment of this application;

FIG. 4(b) is a schematic diagram of a configuration and pattern of relative RE offsets according to an embodiment of this application;

FIG. 5 is a schematic structural diagram of an apparatus for transmitting a positioning reference signal resource according to an embodiment of this application;

FIG. 6 is a schematic structural diagram of a communication device according to an embodiment of this application;

FIG. 7 is a schematic structural diagram of a communication device according to an embodiment of this application; and

FIG. 8 is a schematic structural diagram of a communication device according to an embodiment of this application.

## DETAILED DESCRIPTION

At present, RedCap terminals have limited capabilities, supporting only a maximum bandwidth of 20 M in FR1 and a maximum bandwidth of 100 M in FR2, which are much smaller than the bandwidths supported by ordinary terminals. In terminal positioning, bandwidth is an important factor that influences positioning accuracy. In general, the larger the bandwidth, the higher the positioning accuracy. Therefore, for RedCap terminal positioning, when bandwidth is limited, it is necessary to study how to improve the effective bandwidth.

At present, in order to increase the effective bandwidth for positioning, a frequency hopping (frequency hopping) manner may be used. Specifically, terminals can send positioning reference signals at different times with smaller bandwidth and staggered frequency domain positions to increase the overall effective bandwidth of the positioning reference signal. Positioning reference signals of adjacent hops are partially overlapped in a frequency domain. By calculating a phase relationship between overlapped channels, it can, to some extent, ensure the phase consistency of channel measurements on different hops and improve the merging performance.

Generally speaking, RF retuning (RF retuning) is required between different positioning reference signal hops, so the distance between adjacent hops in the time domain needs to be at least greater than RF retuning time. In this way, if a positioning reference signal resource (resource) undergoes frequency hopping within slots (slots), there needs to be a gap (gap) between symbols used for different hops of positioning reference signals. However, in existing protocols, a mapping pattern of the positioning reference signal resource (such as an SRS resource) within one slot is consecutive in the time domain, and there is no gap for RF retuning between hops. Therefore, it is necessary to redesign a mapping pattern that can be used for frequency hopping, including gap symbols therein.

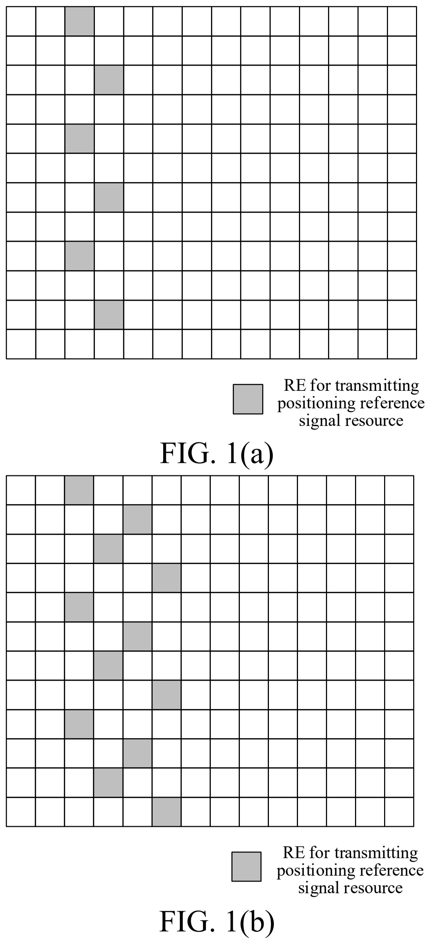

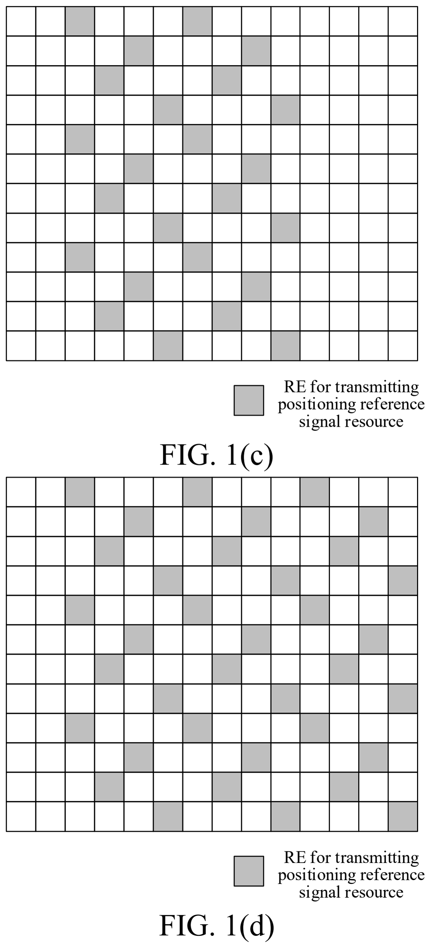

Taking the comb size being equal to 4 (i.e., comb=4) and the positioning reference signal resource being an SRS resource as an example, in the existing protocols, when performing hopping transmission of the SRS resource, the protocols stipulate that the configurations corresponding to relative RE offsets are {0, 2}, {0, 2, 1, 3}, {0, 2, 1, 3, 0, 2, 1, 3}, and {0, 2, 1, 3, 0, 2, 1, 3, 0, 2, 1, 3}. Corresponding time-frequency mapping patterns within one slot are as shown in FIG. 1(a), FIG. 1(b), FIG. 1(c), and FIG. 1(d), where the horizontal axis represents the time domain, and the vertical axis represents the frequency domain. From FIG. 1(a), it can be seen that the SRS resources may be transmitted consecutively on two symbols, but there is no gap between these two symbols. From FIG. 1(b), it can be seen that the SRS resources may be transmitted consecutively on four symbols, but there is no gap between these four symbols. From FIG. 1(c), it can be seen that the SRS resources may be transmitted consecutively on eight symbols, but there is no gap between these eight symbols. From FIG. 1(d), it can be seen that the SRS resources may be transmitted consecutively on 12 symbols, but there is no gap between these 12 symbols. In other words, in the existing protocols, a mapping pattern of the SRS resource within one slot is consecutive in the time domain, and there is no gap for RF retuning between hops. Therefore, it is necessary to redesign a mapping pattern that can be used for frequency hopping, including a gap symbol(s) (gap symbol(s)) therein.

Embodiments of this application provide a method for transmitting a positioning reference signal resource, and a communication device. When sending or receiving a positioning reference signal resource for terminal positioning, symbols occupied by the positioning reference signal resource within a slot include at least one symbol group, and each symbol group includes one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops. In this way, since positioning reference signals can be sent or received through a hopping transmission manner, the effective bandwidth of the positioning reference signal can be improved, thus improving the positioning accuracy. In addition, since there are gap symbols between adjacent symbol groups occupied by the positioning reference signal resource within the slot, and the length of the gap symbols is not less than the switching time between hops, it can also facilitate radio frequency retuning between different hops, thus ensuring the effective transmission of the positioning reference signal resource.

It is to be understood that the positioning reference signals in the embodiments of this application include, but are not limited to, an uplink positioning reference signal and a downlink positioning reference signal. The hopping transmission in the embodiments of this application may be hopping transmission of the uplink positioning reference signal or hopping transmission of the downlink positioning reference signal. The uplink positioning reference signal includes, but is not limited to, at least one of a sounding reference signal (Sounding Reference Signal, SRS) and an SRS for positioning (SRS for positioning). The downlink positioning reference signal includes, but is not limited to, at least one of a downlink positioning reference signal (Down Link Positioning Reference Signal, DL PRS), a channel state information reference signal (Channel State Information-Reference Signal, CSI-RS), and a tracking reference signal (Tracking Reference Signal, TRS).

The technical solutions in the embodiments of this application will be clearly described below with reference to the accompanying drawings in the embodiments of this application. Apparently, the described embodiments are merely some rather than all of the embodiments of this application. All other embodiments obtained by those skilled in the art based on the embodiments of this application still fall within the scope of protection of this application.

Terms such as "first" and "second" in the description and claims of this application are used for distinguishing similar objects, instead of describing a specific order or sequence. It is to be understood that terms used in this way are exchangeable in a proper case, so that the embodiments of this application can be implemented in an order different from the order shown or described herein; and the objects distinguished by "first" and "second" are usually of the same class and the number of the objects is not limited; for example, the number of first objects may be one or more. In addition, "and/or" in the description and claims represents at least one of the connected objects. Character "/" generally represents an "or" relationship between the associated objects.

It is worth pointing out that the technologies described in the embodiments of this application are not limited to the long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single-carrier Frequency Division Multiple Access, SC-FDMA), and other systems. The terms "system" and "network" in the embodiments of this application can be usually exchanged in use. The technologies described not only can be applied to the systems and radio technologies mentioned above, and but also can be applied to other systems and radio technologies. The following description describes the new radio (New Radio, NR) system for example purposes and uses NR terminology in most of the following description, but these technologies can also be applied to applications outside of NR system applications, such as 6th generation (6th Generation, 6G) communication systems.

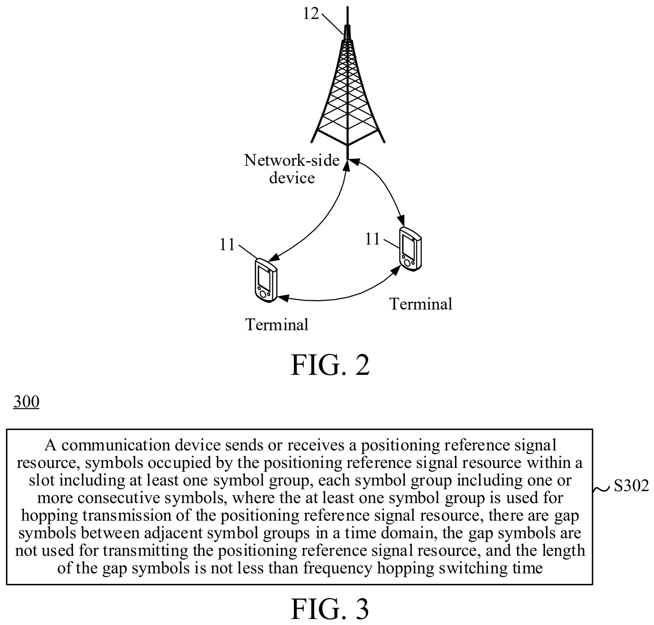

FIG. 2 is a block diagram of a wireless communication system applicable in an embodiment of this application. The wireless communication system includes a terminal 11 and a network-side device 12. The terminal 11 may be a terminal-side device such as a mobile phone, a tablet personal computer (Tablet Personal Computer), a laptop computer (Laptop Computer), also referred to as a notebook computer, a personal digital assistant (Personal Digital Assistant, PDA), a hand-held computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), smart home (home devices with wireless communication functions, such as refrigerators, televisions, washing machines, or furniture), a game console, a personal computer (Personal Computer, PC), an automatic teller machine or a self-service machine. The wearable device includes a smart watch, a smart hand ring, a smart headphone, smart glasses, a smart jewelry (a smart bracelet, a smart chain bracelet, a smart ring, a smart necklace, a smart anklet, a smart chain anklet, etc.), a smart wristband, smart clothing, etc. It is to be understood that the specific type of the terminal 11 is not limited in the embodiments of this application. The network-side device 12 may include an access network device or a core network device. The access network device 12 may also be referred to as a wireless access network device, a radio access network (Radio Access Network, RAN), a wireless access network function, or a wireless access network unit. The access network device 12 may include a base station, a wireless local area network (Wireless Local Area Network, WLAN) access point, a wireless fidelity (Wireless Fidelity, WiFi) node, etc. The base station may be referred to as a node B, evolved node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission reception point (Transmission Reception Point, TRP), or some other suitable terms in the field, as long as the same technical effect is achieved. The base station is not limited to specific technical terms. It is to be understood that description is made by using only a base station in an NR system as an example in the embodiments of this application, but the specific type of the base station is not limited.

The method for transmitting the positioning reference signal resource and the communication device provided in the embodiments of this application will be described below in detail through some embodiments and application scenarios with reference to the accompanying drawings.

Referring to FIG. 3, an embodiment of this application provides a method 300 for transmitting a positioning reference signal resource. The method may be executed by a communication device. In other words, the method for transmitting the positioning reference signal resource may be executed by software or hardware installed in the communication device. The method for transmitting the positioning reference signal resource includes the following steps.

In S302, a communication device sends or receives a positioning reference signal resource. Symbols occupied by the positioning reference signal resource within a slot include at least one symbol group. Each symbol group includes one or more consecutive symbols. The at least one symbol group is used for hopping transmission of the positioning reference signal resource. There are gap symbols between adjacent symbol groups in a time domain. The gap symbols are not used for transmitting the positioning reference signal resource. The length of the gap symbols is not less than switching time between hops.

The communication device may be a terminal (UE) or a network-side device. The network-side device may be, for example, a base station or the like. The positioning reference signal may be an uplink positioning reference signal, such as SRS, or a downlink positioning reference signal, such as DL PRS, CSI-RS, or TRS. In this embodiment of this application, when the communication device sends or receives a positioning reference signal resource, symbols occupied by the positioning reference signal resource within a slot (slot) include at least one symbol group (symbol group), that is, symbols occupied by the positioning reference signal resource within one slot (or distribution of symbols within one slot) are composed of at least one symbol group. Each symbol group may include one symbol (symbol) or multiple consecutive symbols (symbols), and adjacent symbol groups in the time domain have a gap symbol(s) (gap symbol(s)). The at least one symbol group occupied by the positioning reference signal resource within the slot may be used for hopping transmission of the positioning reference signal resource (that is, different symbol groups correspond to different hops). The transmission of the positioning reference signal resource is not performed on the gap symbol between the symbol groups, and the length of the gas symbols should not be less than the switching time between hops (i.e., the time for switching between adjacent hops). That is to say, the length of the gap symbol(s) at least includes the time for switching between adjacent hops.

In this way, since positioning reference signals can be sent or received through a hopping transmission manner, the effective bandwidth of the positioning reference signal can be improved, thus improving the positioning accuracy. In addition, since there are gap symbols between adjacent symbol groups occupied by the positioning reference signal resource within the slot, and the length of the gap symbols is not less than the switching time between hops, it can also facilitate radio frequency retuning between different hops, thus ensuring the effective transmission of the positioning reference signal resource.

Optionally, for the at least one symbol group occupied by the positioning reference signal resource within one slot, the numbers of symbols included in each symbol group are the same, and relative resource element (RE) offsets corresponding to each of the at least one symbol group are the same, or the numbers of symbols included in different symbol groups of the at least one symbol group have an integer multiple relationship, relative RE offsets corresponding to symbol groups with the same number of symbols are the same, and a relative RE offset corresponding to a symbol group with more symbols includes a relative RE offset corresponding to a symbol group with fewer symbols.

For example, one slot includes two symbol groups, namely a symbol group 1 and a symbol group 2, the number of symbols included in the symbol group 1 is 2, the number of symbols included in the symbol group 2 is 4 (that is, the numbers of symbols included in the two symbol groups have an integer multiple relationship), a relative RE offset corresponding to the symbol group 2 is {0,2,1,3}, and a relative RE offset corresponding to the symbol group 1 is {0,2} or {1,3} (that is, the relative RE offset corresponding to the symbol group 2 with more symbols includes the relative RE offset corresponding to the symbol group 1 with fewer symbols).

Optionally, the method further includes: not performing, by the communication device, hopping transmission of the positioning reference signal resource within the slot in at least one of the following cases:

the number of symbols included in one symbol group is the same as the number of symbols occupied by the positioning reference signal resource within one slot;
the positioning reference signal resource includes one symbol group within one slot;
the symbol group is not configured or defined.

For example, taking the positioning reference signal resource being an SRS resource as an example, if the number of symbols included in one symbol group is equal to the number of symbols of the SRS resource within one slot, or if the SRS resource includes one symbol group in one slot, or if no symbol group is configured or defined, then hopping transmission of the SRS resource is not performed in the slot. In this way, it can facilitate the communication device to confirm whether to perform hopping transmission within the slot.

It is to be understood that although the positioning reference signal does not undergo hopping transmission within one slot in a case that the positioning reference signal resource includes one symbol group within one slot, optionally, hopping transmission of the positioning reference signal resource may be performed between slots. For example, if the communication device sends or receives the positioning reference signal resource on multiple slots, the multiple slots are located in one cycle of the positioning reference signal resource, and the positioning reference signal resources on the multiple slots correspond to the same positioning reference signal resource identifier, so, if the positioning reference signal resource includes one symbol group within one slot thereof, then the positioning reference signal resource may undergo hopping transmission between slots.

Optionally, in a case that a first symbol of the positioning reference signal resource and a second symbol of another signal or channel belong to different bandwidth parts (Bandwidth Parts, BWPs), a gap between the first symbol and the second symbol is not less than the switching time between hops, where the first symbol is 1st symbol occupied by the positioning reference signal resource within one slot, and the second symbol is a last symbol of the other signal or channel.

For example, taking a terminal as an example, after transmitting data, the terminal performs hopping transmission. If the first symbol during first frequency hopping and the last symbol during data transmission are not on the same BWP, the gap between the last symbol during data transmission and the first symbol during first frequency hopping should not be less than the switching time between hops or BWP switching time.

Optionally, the position of the symbol group and the number of symbols in the symbol group may not be explicitly reflected, but may be implicitly reflected. For example, the position of the symbol group may be implicitly determined according to the position of the gap symbol between the symbol groups. For details, a reference may be made to subsequent related content, which will not be described in detail here.

In this embodiment of this application, in a case that the communication device sends or receives the positioning reference signal resource, it may further determine a mapping relationship between symbol numbers within the positioning reference signal resource and symbol positions of the positioning reference signal resource within one slot (or symbol positions of the symbol group within the slot) according to at least one of a first manner, a second manner, a third manner, and a fourth manner. The symbol number within the positioning reference signal resource may be correspondingly referred to as "OFDM symbol number within the SRS or PRS resource" (the positioning reference signal resource is an SRS resource or a PRS resource), and the symbol number may be specifically $\{0, 1, ..., N_{symb}-1\}$, where $N_{symb}$ is the number of symbols of the positioning reference signal resource within one slot. The symbol position of the positioning reference signal resource in one slot may be the symbol number of all symbols of the positioning reference signal resource within one slot, specifically $\{0, 1, ..., N_{slot}-1\}$, where $N$slot is the number of symbols occupied by one slot.

The four manners described above will be respectively described below in detail.

For the first manner described above, the first manner represents determining the mapping relationship between symbol numbers within the positioning reference signal resource and symbol positions of the positioning reference signal resource within one slot according to at least one of a starting symbol (starting symbol), a first number of symbols (number of symbols), a gap duration (gap duration), and the number of symbols in the symbol group (number of symbols in the symbol group). The four parameters, i.e., the starting symbol, the first number of symbols, the gap duration, and the number of symbols in the symbol group, may be agreed by a protocol, and/or configured by a network-side device, and/or selected by a terminal.

The starting symbol represents a starting symbol position of the positioning reference signal resource within the slot (which is an existing parameter and is the same as defined in the existing protocols), i.e., a starting symbol of a first symbol group within the slot.

The first number of symbols represents the number of symbols occupied by positioning reference signals within the slot (which is an existing parameter and is the same as defined in the existing protocols).

The gap duration (gap duration) represents the number of gap symbols between adjacent symbol groups, that is, the length of the gap duration is equal to a duration corresponding to the number of gap symbols between adjacent symbol groups. Optionally, the gap durations between adjacent symbol groups may be the same or different, and in a case that the gap durations between adjacent symbol groups are different, the gap durations may include multiple values (or a group of values). Optionally, the gap duration may be represented by a "symbol group gap", and the symbol group gap is a gap between the starting symbols in adjacent symbol groups. When the gap duration is represented by the symbol group gap, specifically, the gap duration may be equal to a difference between the symbol group gap and the number of symbols in the symbol group, that is, the gap duration may be obtained by subtracting the symbol group gap from the number of symbols in the symbol group. It is to be understood that it is required to skip symbols occupied by a potential gap duration when calculating the symbol position of the positioning reference signal resource within the slot.

The number of symbols in the symbol group (which may also be referred to as the duration of the symbol group) represents the number of consecutive symbols included in one symbol group. Optionally, the numbers of symbols in different symbol groups are the same or different within one slot, and in a case that the numbers of symbols in different symbol groups are different within one slot, the numbers of symbols in symbol groups may include multiple values (or a group of values). For example, in an implementation mode, the numbers of symbols in a group of symbol groups includes two values, a first value is the number of symbols in a first symbol group, a second value is the number of symbols in another symbol group, and the first value is greater than the second value (or the first value is an integer multiple of the second value, where the integer multiple is greater than 1). Generally speaking, the number of symbols in the symbol group may be configured by a network or determined according to a manner as agreed by a protocol. In addition, optionally, the number of symbols in the symbol group may also be determined by at least one of:

determining according to the number of symbols occupied by the positioning reference signal resource within the slot and the number of symbol groups;

determining according to a repetition factor (repetition factor) and the number of symbols occupied by one in-slot repetition, the repetition factor representing the number of in-slot repetitions included in one symbol group.

Specifically, when determining the number of symbols in the symbol group according to the number of symbols occupied by the positioning reference signal resource within the slot and the number of symbol groups, if the numbers of symbols in different symbol groups are the same within the slot, the number of symbols in the symbol group is equal to a ratio of the number of symbols occupied by the positioning reference signal resource within the slot to the number of symbol groups. When determining the number of symbols in the symbol group according to the repetition factor and the number of symbols occupied by one in-slot repetition, the number of symbols in the symbol group may be equal to a product of the repetition factor and the number of symbols occupied by one in-slot repetition, where the number of symbols occupied by one in-slot repetition may be determined according to a table of relative RE offsets or configured by a network. Optionally, if the number of symbols occupied by one in-slot repetition is 1, then the number of symbols in the symbol group is equal to the repetition factor.

Optionally, the symbol number within the symbol group may be represented as {0, 1, ..., the number of symbols in the symbol group-1}.

When determining the mapping relationship between symbol numbers within the positioning reference signal resource and symbol positions of the positioning reference signal resource within one slot according to at least one parameter of the starting symbol, the first number of symbols, the gap duration, and the number of symbols in the symbol group, it may be implemented through the following formulae:

$$l = \left\lfloor l' / N_{symb}^{group} \right\rfloor * N_{symb}^{gap} + l' + l_0 ,$$

or

$$l' = \left\lfloor (l - l_0) \Big/ \left( N_{symb}^{group} + N_{symb}^{gap} \right) \right\rfloor * N_{symb}^{group} + (l - l_0) \bmod \left( \left( N_{symb}^{group} + N_{symb}^{gap} \right) \right),$$

where $l$ is a symbol position of the positioning reference signal resource within one slot, the symbol position may be used for actual positioning reference signal resource mapping, $l_0$ is the starting symbol position of the positioning reference signal resource within one slot, $l'$ is the symbol number within the positioning reference signal resource, $l' \in \{0, 1, ..., N_{symb}\text{-}1\}$,

$N_{symb}$ is the number of symbols of the positioning reference signal resource within one slot, $N_{symb}^{group}$ is the number of symbols in the symbol group, and $N_{symb}^{gap}$ is the gap duration between the symbol groups.

Optionally, $l'$ may be used for the time-frequency mapping of the positioning reference signal resource, and a relative RE offset corresponding to the symbol $l'$ may be obtained according to a table agreed by a protocol, for example.

Optionally, the number $N_{symb}^{group}$ of symbols in the symbol group may be equal to $R * N_{symb}^{rep}$, where R is the repetition factor (repetition factor), and $N_{symb}^{rep}$ is the number of symbols occupied by one in-slot repetition. If $N_{symb}^{rep} = 1$, $N_{symb}^{group} = R$.

For the second manner described above, the second manner represents determining the mapping relationship between symbol numbers within the positioning reference signal resource and symbol positions of the positioning reference signal resource within one slot according to at least one of the starting symbol, the number of symbol groups, a starting symbol of each symbol group, and the number of symbols in the symbol group The starting symbol, the number of symbol groups, the starting symbol of each symbol group, and the number of symbols in the symbol group may be agreed by a protocol, and/or configured by a network-side device, and/or selected by a terminal.

The starting symbol represents a starting symbol position of the positioning reference signal resource within the slot (which is an existing parameter and is the same as defined in the existing protocols), i.e., a starting symbol of a first symbol group within the slot.

The number of symbol groups is the number of the number of symbols occupied by the positioning reference signal resource within the slot. Optionally, the number of symbol groups may be indicated through an explicit indication manner. Optionally, the number of symbol groups may also be determined according to the number of symbols of the positioning reference signal resource and the number of symbols in one symbol group. For example, if the numbers of symbols in each symbol group are the same, the number of symbol groups may be equal to a ratio of the number of symbols of the positioning reference signal resource to the number of symbols in the symbol group. Optionally, the number of symbol groups may also be implicitly indicated according to the starting symbol of each symbol group or the number of symbols in each symbol group. For example, if the starting symbol of each symbol group is [2, 6], it may be determined that there are two symbol groups, and the starting symbols of the two symbol groups are 2 and 6, respectively.

The starting symbol of each symbol group may determined by at least one of:

determining through an indicated symbol index of the starting symbol of each symbol group;
determining through an indicated gap between starting symbols of adjacent symbol groups.

Optionally, the gaps between starting symbols of adjacent symbol groups may be the same. Optionally, the gap between starting symbols of adjacent symbol groups may be determined according to the gap duration between adjacent symbol groups. For example, the gap between starting symbols of adjacent symbol groups=the gap duration between adjacent symbol groups+the number of symbols in the symbol group.

The number of symbols in the symbol group represents the number of consecutive symbols included in one symbol group. For details, a reference may be made to the description of the number of symbols in the symbol group in the first manner described above, which will not be repeated here.

Optionally, the symbol number within the symbol group may be represented as {0, 1, ..., the number of symbols in the symbol group-1}.

When determining the mapping relationship between symbol numbers within the positioning reference signal resource and symbol positions of the positioning reference signal resource within one slot according to at least one parameter of the starting symbol, the number of symbol groups, the starting symbol of each symbol group, and the number of symbols in the symbol group, it may be implemented through the following formula:

$$l' = \left\lfloor (l - l_0)/N_{symb}^{\mathrm{int}erval} \right\rfloor + (l - l_0) \bmod \left( N_{symb}^{\mathrm{int}erval} \right),$$

where $l'$ is the symbol number within the positioning reference signal resource and may be used for the time-frequency mapping of the positioning reference signal resource, $l' \in \{0, 1, ..., N_{symb}-1\}$, $N_{symb}$ is the number of symbols of the positioning reference signal resource within one slot, $l$ is a symbol position of the positioning reference signal resource within one slot, $l_0$ is the starting symbol position of the positioning reference signal resource within one slot, and $N_{symb}^{\mathrm{int}erval}$ is a gap between starting symbols of symbol groups. Here, it is assumed that the gaps between starting symbols of symbol groups are the same, which are all $N_{symb}^{\mathrm{int}erval}$.

Optionally, $l'$ may be used for the time-frequency mapping of the positioning reference signal resource, and a relative RE offset corresponding to the symbol $l'$ may be obtained according to a table agreed by a protocol, for example.

For the third manner described above, the third manner represents determining the mapping relationship between symbol numbers within the positioning reference signal resource and symbol positions of the positioning reference signal resource within one slot according to at least one of the starting symbol, a second number of symbols, a starting position of the gap symbol, the gap duration, and the number of gaps (number of gaps). The starting symbol, the second number of symbols, the starting position of the gap symbol, the gap duration, and the number of gaps may be agreed by a protocol, and/or configured by a network-side device, and/or selected by a terminal.

At least one of the starting position of the gap symbol, the gap duration, and the number of gaps (number of gaps) is used for determining a symbol position of the gap symbol within the positioning reference signal resource or within the slot. Therefore, at least one of the starting position of the gap symbol, the gap duration, and the number of gaps (number of gaps) described above may be integrally replaced with "the symbol position of the gap symbol within the positioning reference signal resource or within the slot" described below.

Optionally, the symbol position of the gap symbol within the positioning reference signal resource or within the slot may be determined through a "relative RE offset mapping table", so there is no need to specifically configure "at least one of the starting position of the gap symbol, the gap duration, and the number of gaps (number of gaps)" to determine the symbol position of the gap. For example, a mapping table (such as a first mapping table below) among the symbol numbers within the positioning reference signal resource, comb sizes, and relative RE offsets is agreed by a protocol. If the number of symbols of the positioning reference signal resource includes a gap symbol (gap symbol), or the symbol number within the positioning reference signal resource includes a gap symbol, the value of the relative RE offset corresponding to the gap symbol in the first mapping table is set to invalid, indicating that the corresponding symbol is a gap symbol, the positioning reference signal resource is not transmitted, and RE mapping of the positioning reference signal resource is not performed.

The starting symbol represents a starting symbol position of the positioning reference signal resource within the slot (which is an existing parameter and is the same as defined in the existing protocols), i.e., a starting symbol of a first symbol group within the slot.

The second number of symbols represents the number of symbols occupied by the positioning reference signal resource within the slot, and the number of symbols includes the number of gap symbols within the positioning reference signal resource, that is, the second number of symbols represents the number of symbols occupied by the positioning reference signal within the slot and the number of gap symbols within the slot. Alternatively, the second number of symbols represents the number of symbols occupied by positioning reference signals within the slot (which does not consider the gap symbol, is an existing parameter, and is the same as defined in the existing protocols).

The gap duration represents the number of gap symbols between adjacent symbol groups. Optionally, the gap durations between adjacent symbol groups may be the same or different, and in a case that the gap durations between adjacent symbol groups are different, the gap durations may include multiple values (or a group of values). It is to be understood that if the second number of symbols represents the number of symbols occupied by the positioning reference signal within the slot, it is required to skip symbols occupied by a potential gap duration when calculating the symbol position of the positioning reference signal resource within the slot. Optionally, the gap duration may be represented by a "symbol group gap", and the symbol group gap is a gap between the starting symbols in adjacent symbol groups. When the gap duration is represented by the symbol group gap, specifically, the gap duration may be equal to a difference between the symbol group gap and the number of symbols in the symbol group, that is, the gap duration may be obtained by subtracting the symbol group gap from the number of symbols in the symbol group.

The starting position of the gap symbol represents a symbol starting position of one or more gaps within the slot (also referred to as a starting symbol position). Optionally, in a case that there is one gap within the slot, the starting position of the gap symbol may be an offset of the gap relative to the first symbol of the slot. Alternatively, the starting position of the gap symbol is an offset of the gap relative to the first symbol of the positioning reference signal resource. Alternatively, the starting position of the gap symbol is an offset of the gap relative to a symbol of a previous or next positioning reference signal resource of the gap (optionally, an offset relative to the symbol of the previous positioning reference signal resource, that is, the gap position is obtained according to the symbol position of the previous positioning reference signal of the gap (for example, by indicating the symbol index of the previous positioning reference signal of the gap), and optionally, a default offset is one symbol; an offset relative to the symbol of the next positioning reference resource (for example, by indicating the symbol index of the next positioning reference signal of the gap), that is, the gap position is obtained according to the symbol position of the next positioning reference signal of the gap, and optionally, the number of symbols of the default offset is the number of gap symbols), where the symbol index (symbol index) of the previous or next positioning reference signal resource of the gap may be the symbol index within the slot or the symbol index within the positioning reference signal resource.

Optionally, in a case that multiple gaps are included within the slot, the starting position of the gap symbol may include starting positions of the multiple gap symbols, where the symbol starting position of each gap includes at least one of:

the offset relative to the first symbol of the slot, or the offset relative to the first symbol of the positioning reference signal resource, or the offset relative to the symbol of the previous or next positioning reference signal resource;

an offset relative to a first gap;

an offset relative to a previous gap.

Specifically, in multiple gaps, a symbol starting position of a first gap is determined according to the same manner for determining the starting symbol position of the gap when one gap is included within the slot, that is, the symbol starting position of the first gap may be an offset of the first gap relative to a first symbol of the slot, or an offset of the first gap relative to a first symbol of the positioning reference signal resource, or an offset of the first gap relative to a symbol of a previous or next positioning reference signal resource of the first gap. In multiple gaps, the symbol starting positions of other gaps except the first gap may be determined according to multiple manners. A first manner is the same as the manner for determining the symbol starting position of the first gap. A second manner is to use the offsets of the other gaps relative to the first gap as the symbol starting positions of the other gaps. A third manner is to use the offsets of the other gaps relative to the previous gap as the symbol starting positions of the other gaps. Optionally, if multiple gaps are equally spaced, then in a case that the gap between adjacent gaps is given, the symbol starting positions of the other gaps may be determined according to the symbol starting position of the first gap. Optionally, in a case that the position of the symbol group is not explicitly indicated, the position of the symbol group may also be implicitly determined according to the symbol starting position of the gap.

The number of gaps represents the number of gaps between symbols occupied by the positioning reference signal resource within one slot or the number of gaps included within one slot.

Optionally, in a case that the second number of symbols represents the number of symbols occupied by the positioning reference signal resource within the slot and the number of symbols includes the number of gap symbols within the positioning reference resource, when the communication device determines the mapping relationship between the symbol numbers within the positioning reference signal resource and the symbol positions of the positioning reference signal resource within one slot according to the third manner, the symbol number within the positioning reference signal resource includes the symbol number of the gap symbol within the slot, and the gap symbol within the slot needs to be excluded, that is, when the communication device determines the symbols of the actual transmitted positioning reference signal resource according to the starting symbol and the second number of symbols, the gap symbol within the slot needs to be excluded.

Optionally, when determining the mapping relationship between symbol numbers within the positioning reference signal resource and symbol positions of the positioning reference signal resource within one slot according to at least one parameter of the starting symbol, the second number of symbols, the starting position of the gap symbol, the gap duration, and the number of gaps, it may be implemented through the following formulae:

$$l = \left\lfloor l' \big/ n_{symb}^{gap\_start} \right\rfloor * N_{symb}^{gap} + l' + l_0 \,,$$

or

$$l' = \left\lfloor \left(l - l_0\right) \big/ \left(n_{symb}^{gap\_start} + N_{symb}^{gap}\right) \right\rfloor * n_{symb}^{gap\_start} + \left(l - l_0\right) \bmod \left(\left(n_{symb}^{gap\_start} + N_{symb}^{gap}\right)\right) \,,$$

where *l* is a symbol position of the positioning reference signal resource within one slot, the symbol position may be used for actual positioning reference signal resource mapping, $l_0$ is the starting symbol position of the positioning reference signal resource within one slot, $l'$ is the symbol number within the positioning reference signal resource, $l' \in \{0, 1, ..., N_{symb}-1\}$, $N_{symb}$ is the number of symbols of the positioning reference signal resource within one slot (here, the second number of symbols $N_{symb}$ represents the number of symbols occupied by positioning reference signals within the slot, and does not include gap symbols; the influence of gap symbols needs to be considered when determining the mapping relationship between $l'$ and $l$), $N_{symb}^{gap}$ is a gap duration between symbol groups, and $n_{symb}^{gap\_start}$ is a starting symbol position of a first gap. Here, it may be assumed that the starting symbol position of the first gap is an offset relative to the starting symbol of the positioning reference signal resource or $n_{symb}^{gap\_start}$ is the position of a symbol of a next positioning reference signal resource of the first gap, and multiple gaps are equally spaced, that is, the gaps between multiple gaps are the same or are spaced apart by positioning reference signal resources of the same symbols.

For example, the symbols within the positioning reference signal resource require $l' \in \{0, 1, 2, 3, 4, 5\}$, and the gaps appear before the symbols with symbol numbers 2 and 4. In this case, $n_{symb}^{gap\_start}$ may be valued as 2, and the gap position is represented by the position of the symbol of the next positioning reference signal resource of the gap. Then, the mapping relationship between symbol numbers within the positioning reference signal resource and symbol numbers within the slot may be obtained through the above formula.

Alternatively, the mapping relationship between symbol numbers within the positioning reference signal resource and symbol positions of the positioning reference signal resource within one slot may be represented through the following formula, where $l_0$ is the starting symbol position of the positioning reference signal resource within one slot, $l'$ is the symbol number within the positioning reference signal resource, $l' \in \{0, 1, ..., N_{symb}-1\}$, $N_{symb}$ is the number of symbols of the positioning reference signal resource within one slot, and this number of symbols includes the number of gap symbols within the positioning reference signal resource. So, the symbol position $l$ within the slot corresponding to the symbol number $l'$ within the positioning reference signal resource (the symbol position within this slot may be used for actual positioning reference signal resource mapping, such as determining the relative RE offset corresponding to the symbol number $l'$ within the positioning reference signal resource) is:

$$l = l' + l_0 \text{; or, } l=l_0, l_0+1, ..., l_0+N_{symb}-1.$$

Here, if the symbol $l$ is the gap symbol, then the symbol $l$ is not used (or the symbol $l$ does not transmit the positioning reference signal resource or is not used for positioning reference signal resource mapping, or the symbol $l$ is invalid).

For the fourth manner described above, the fourth manner represents determining the mapping relationship between symbol numbers within the positioning reference signal resource and symbol positions of the positioning reference signal resource within one slot according a bitmap manner. The length of the bitmap is the number of symbols within one slot, a bit with a value of 1 in the bitmap is used for the transmission of the positioning reference signal resource, and a bit with a value of 0 is not used for the transmission of the positioning reference signal resource.

Optionally, in the bitmap, the symbol group is represented by consecutive bits with a value of 1, and a gap between symbol groups is represented by a bit with a value of 0 between symbol groups.

Optionally, the symbol number within the positioning reference signal resource is a symbol number obtained by sequentially arranging the bits with a value of 1 in the bitmap; and/or, the symbol number within the symbol group is a symbol number obtained by sequentially arranging the consecutive bits with a value of 1 in the symbol group.

The above describes how the communication device determines the mapping relationship between symbol numbers within the positioning reference signal resource and symbol positions of the positioning reference signal resource within one slot in detail. After determining the mapping relationship, the communication device may know the time-frequency mapping of the positioning reference signal resource (such as a relative RE offset corresponding to the symbol number within the positioning reference signal resource), thus achieving the hopping transmission of the positioning reference signal resource.

Optionally, in a case that the communication device determines the mapping relationship between symbol numbers within the positioning reference signal resource and symbol positions of the positioning reference signal resource within one slot according to at least one of the four manners described above, further, it may further determine a hop count within the slot according to at least one of the number of symbols in the symbol group, the symbol number within the positioning reference signal resource, a symbol group number, the gap duration, and the starting position of the gap symbol. The hop count within the slot is used for determining a positioning reference signal narrowband corresponding to hopping transmission.

Optionally, as an embodiment, the hop count within the slot may be determined through the following formula:

$$n = \left\lfloor l' \big/ N_{symb}^{group} \right\rfloor,$$

where $l'$ is the symbol number within the positioning reference signal resource, $l' \in \{0, 1, ..., N_{symb}-1\}$, $N_{symb}$ is the number of symbols of the positioning reference signal resource within one slot, and $N_{symb}^{group}$ is the number of symbols in the symbol group.

Optionally, as an embodiment, the hop count within the slot may also be determined through the following formula:

$$n = n_{group},$$

where $n_{group}$ is the symbol group numbers within the slot.

In this embodiment of this application, in a case that the communication device performs hopping transmission on the positioning reference signal resource within the slot, it may further determine a time-frequency mapping pattern of the positioning reference signal resource within the slot, that is, determine a relative RE offset. Specifically, the communication device may determine the time-frequency mapping pattern of the positioning reference signal resource within the slot according to at least one of the following two manners.

First manner:

The communication device determines relative RE offsets corresponding to the symbols of the positioning reference signal resource under different comb sizes (or relative RE offsets corresponding to each symbol in each symbol group under different comb sizes) during hopping transmission according to a first mapping table among symbol numbers within the positioning reference signal resource, the comb sizes, and the relative RE offsets.

Second manner:

The communication device determines relative RE offsets corresponding to the symbols in the symbol group under different comb sizes (or relative RE offsets corresponding to each symbol in each symbol group under different comb sizes) during hopping transmission according to a second mapping table among symbol numbers in the symbol group, the comb sizes, and the relative RE offsets. Further, considering that the symbols in the symbol groups are the symbols of the positioning reference signal resource, determining the relative RE offsets corresponding to the symbols in the symbol groups under different comb sizes during hopping transmission may also be expressed as "determining the relative RE offsets corresponding to the symbols of the positioning reference signal under different comb sizes during hopping transmission".

The two manners for determining the time-frequency mapping pattern described above will be described respectively below.

In the first manner described above, optionally, the first mapping table may be a newly added mapping table dedicated to hopping transmission. In the first mapping table, for any comb size and any number of symbols of the positioning reference signal resource, one or more corresponding relative RE offsets may be included.. Further, under a specific comb size and a specific number of symbols of the positioning reference signal resource, if there are multiple relative RE offsets, a network-side device may indicate one of the multiple relative RE offsets, or a terminal may determine one thereof as agreed by a protocol.

For example, in a case that the comb size is 4 and the number of symbols of the positioning reference signal resource is 8, the corresponding relative RE offsets may possibly be {0, 2, 1, 3, 0, 2, 1, 3}, {0, 2, 0, 2, 0, 2, 0, 2}, and the like, and the network-side device may indicate one thereof.

For another example, the terminal determines one thereof as agreed by a protocol, which may be determined through a relationship of relative RE offsets between symbol groups (see the above description for relative RE offsets of symbol groups). If the corresponding relative RE offsets in different symbol groups are the same as agreed by a protocol, the terminal may determine the relative RE offset that conforms to this relationship.

Optionally, in a case that the first mapping table is a newly added mapping table, the number of symbols of the positioning reference signal resource within the slot may not be limited to the current numbers (i.e., 1, 2, 4, 8, 12) of symbols of the positioning reference signal resource within the slot. For example, the number of symbols of the positioning reference signal resource within the slot includes, but is not limited to, at least one of {1, 2, 3, 4, 5, 6, 8, 12}.

Optionally, an existing non-frequency hopping mapping table may also be reused as the first mapping table. The non-frequency hopping mapping table is a mapping table among the symbol numbers within the positioning reference signal resource, the comb sizes, and the relative RE offsets when not used for hopping transmission. Alternatively, the first mapping table may also be a mapping table obtained after extension based on the non-frequency hopping mapping table. The extension based on the non-frequency hopping mapping table may include adding corresponding new relative RE offsets for existing numbers of symbols and comb sizes in the non-frequency hopping mapping table, and/or adding a new number of symbols, a new comb, and relative RE offsets corresponding to the new number of symbols and the new comb size to the non-frequency hopping mapping table. Optionally, when a new number of symbols is added to the non-frequency hopping mapping table, the newly added number of symbols includes, but is not limited to, at least one of {3, 5, 6}.

In a case of reusing the non-frequency hopping mapping table as the first mapping table or extending the non-frequency hopping mapping table, optionally, for any comb size and any number of symbols of the positioning reference signal resource in the first mapping table, one or more corresponding relative RE offsets may be included. Further, under a specific comb size and a specific number of symbols of the positioning reference signal resource, if there are multiple relative RE offsets, a network-side device may indicate one of the multiple relative RE offsets, or a terminal may determine one thereof as agreed by a protocol.

Optionally, if the number of symbols of the positioning reference signal resource includes a gap symbol (gap symbol) or the symbol number within the positioning reference signal resource includes a gap symbol, the communication device needs to ignore the relative RE offset corresponding to the gap symbol when determining the relative RE offset according to the first mapping table. Alternatively, if the number of symbols of the positioning reference signal resource includes a gap symbol (gap symbol), or the symbol number within the positioning reference signal resource includes a gap symbol, the value of the relative RE offset corresponding to the gap symbol in the first mapping table is set to invalid, indicating that the corresponding symbol does not transmit the positioning reference signal resource, and RE mapping of the positioning reference signal resource is not performed.

For the second manner described above, optionally, for any comb size and any number of symbols in the symbol group in the second mapping table, one or more corresponding relative RE offsets may be included. Further, under a specific comb size and a specific number of symbols in the symbol group, if there are multiple relative RE offsets, a network-side device may indicate one of the multiple relative RE offsets, or a terminal may determine one thereof as agreed by a protocol.

Optionally, in the second mapping table, the relative RE offsets are relative RE offsets of symbols in the symbol group relative to a first symbol in the symbol group, or relative RE offsets of symbols in the symbol group relative to an RE of a first symbol of the positioning reference signal resource within the slot.

Optionally, the RE offsets (i.e., comb offsets) of first symbols of each symbol group within the positioning reference signal resource are the same. Alternatively, the RE offsets (i.e., comb offsets) of first symbols of each symbol group within the positioning reference signal resource may also be different, and in the case of being different, the RE offset of the first symbol of each symbol group is indicated by a network-side device or agreed by a protocol.

In this embodiment of this application, when sending or receiving the positioning reference signal resource, the communication device may send or receive the positioning reference signal resource on multiple slots to achieve hopping transmission across slots. The multiple slots are located in one cycle of the positioning reference signal resource, and the positioning reference signal resources on the multiple slots correspond to the same positioning reference signal resource identifier (i.e., positioning reference signal resource ID).

Optionally, the number of the multiple slots may be indicated by a network-side device, and/or agreed by a protocol, and/or selected by a terminal. If the positioning reference signal is an uplink positioning reference signal, the multiple slots include uplink slots (UL slots), or uplink slots and flexible slots (flexible slots). If the positioning reference signal is a downlink positioning reference signal, the multiple slots include downlink transmission slots, or downlink slots and flexible slots.

Optionally, if the number of multiple slots is N, the slot numbers within the positioning reference signal resource are 0, 1, 2, ..., N-1.

Optionally, the multiple slots of the positioning reference signal resource may be referred to as a "positioning reference signal burst".

Optionally, time-frequency mapping patterns (patterns) within the slot of multiple slots are the same.

Optionally, the distribution of the multiple slots in the time domain may be that the multiple slots are consecutive or non-consecutive in the time domain. The multiple slots consecutive in the time domain may be consecutive slots that may be used for UL transmission, or consecutive pure UL slots, or absolutely consecutive slots (without distinguishing the format of the slots). The multiple slots being non-consecutive in the time domain may be that there are gaps between the multiple slots.

Optionally, the gaps between the multiple slots may be the same or different. In a case that the gaps between the multiple slots are the same, a position of each slot may be determined according to a slot offset of a starting slot and slot offsets of adjacent slots or a slot gap (slot gap), where the slot gap does not include the slots used for transmitting the positioning reference signal resource, and for example, the slot gap between adjacent slots being 0 is equivalent to an offset between adjacent slots being equal to 1. In a case that the gaps between the multiple slots are different, the position of each slot may be determined according to a slot offset of each slot. Optionally, the slot offset may be a periodic offset, or a slot offset relative to the slot where downlink control information (Downlink Control Information, DCI) is located, or a slot offset relative to an offset indicated by the DCI. Alternatively, in a case that the gaps between the multiple slots are different, the position of each slot may also be determined according to the slot offset of the starting slot and the slot offsets of other slots relative to the starting slot. Optionally, the offset of the starting slot is a periodic offset, or a slot offset relative to the slot where the DCI is located, or a slot offset relative to a certain offset time indicated by the DCI.

Optionally, the slot gap or slot offset described above may be an absolute gap or offset (without distinguishing the format of the slots), or a gap or slot offset that only includes a UL slot, or a gap or offset that includes a UL slot and a flexible slot.

In this embodiment of this application, in a case that the communication device sends or receives the positioning reference signal resource on multiple slots, the multiple slots may include at least one slot group (slot group), that is, the multiple slots may be composed of at least one slot group. The at least one slot group is used for the hopping transmission of the positioning reference signal resource between slots (that is, different slot groups correspond to different hops, with no frequency hopping within one slot group), there is a gap with a length not less than the switching time between hops between adjacent slot groups in the time domain, each slot group includes at least one slot, the at least one slot is arranged sequentially, and the number of the at least one slot may be indicated by a network-side device, and/or agreed by a protocol, and/or selected by a terminal.

Optionally, the method further includes: not performing, by the communication device, hopping transmission of the positioning reference signal resource between slots in at least one of the following cases:

the number of slots included in one slot group is the same as the number of slots of the positioning reference signal resource in one cycle;
the positioning reference signal resource includes one slot group in one cycle;
the slot group is not configured or defined.

That is to say, if the number of slots included in one slot group is equal to the number of slots of the positioning reference signal resource in one cycle, or if the positioning reference signal resource includes one slot group in one cycle, or if no slot group is configured or defined, hopping transmission of the positioning reference signal resource is not performed between slots.

Optionally, in a case that one slot group includes multiple slots, time-frequency mapping patterns within slots of the multiple slots in the slot group are the same.

Optionally, in a case that one slot group includes multiple slots, the multiple slots in the slot group are consecutive in the time domain. The consecutive slots are consecutive slots that may be used for UL transmission, or consecutive pure UL slots, or absolutely consecutive slots (without distinguishing the format of the slots).

Alternatively, in a case that one slot group includes multiple slots, the multiple slots in the slot group may also be non-consecutive in the time domain, that is, there are gaps (gaps) between the multiple slots in the slot group. Optionally, the gaps (or slot offsets) between adjacent slots may be the same, and the gap (or slot offset) may be specifically indicated by a network-side device, and/or agreed by a protocol, and/or selected by a terminal. The slot gap does not include the slots used for transmitting the positioning reference signal resource, and for example, the slot gap between adjacent slots being 0 is equivalent to the offset between adjacent slots being equal to 1. Optionally, the slot gap or slot offset here may be an absolute gap or offset (without distinguishing the format of the slots), or a gap or slot offset that only includes a UL slot, or a gap or offset that includes a UL slot and a flexible slot.

Optionally, the gap between the slot groups and the gap between the slots in the slot group may be the same or different.

Optionally, the gap between the slot groups may be represented by a gap slot (gap slot). The gap slot may be indicated by a network-side device, and/or agreed by a protocol, and/or selected by a terminal. Optionally, the gaps between adjacent slot groups are the same. Optionally, the gap between slot groups may be obtained by subtracting the slot offset between slot groups from the duration of the slot group.

Optionally, slot distributions in the multiple slot groups are the same, and a time domain position of each slot in the multiple slot groups is determined according to the gap between slots in each slot group and the gap between slot groups, that is, the time domain position of each slot may be determined according to the slot gap in each slot group and the slot gap between slot groups.

Optionally, in a case that the multiple slots include at least one slot group, the communication device may further determine a hop count between slots according to at least one of the number of slots in the slot group, a slot number within the positioning reference signal resource, and a slot group number. The hop count between slots is used for determining a positioning reference signal narrowband corresponding to each hopping transmission.

Optionally, as an embodiment, the hop count between slots may be determined through the following formula:

$$n_{\text{slot}} = \left\lfloor n' / N_{slot}^{group} \right\rfloor,$$

where n' is the slot number within the positioning reference signal resource, n'∈ {0, 1, ..., $N_{\text{slot}}$-1}, $N_{\text{slot}}$ is the number of slots occupied by the positioning reference signal resource, and $N_{slot}^{group}$ is the number of slots in the slot group.

Optionally, n' may also be calculated according to the slot where the positioning reference signal resource is located.

In this embodiment of this application, in a case that the communication device sends or receives the positioning reference signal resource on multiple slots, if the positioning reference signal resource is configured with frequency hopping within slots and the positioning reference signal resource includes multiple slots, the communication device performs hopping transmission within slots and between slots according to a symbol distribution of the positioning reference signal resource within each slot (or symbols occupied within each slot).

Optionally, the symbol distributions of the positioning reference signal resource within the multiple slots are the same. In this case, the symbol distributions within the multiple slots may be determined according to the symbol distribution within any slot.

Optionally, the symbol distributions of the positioning reference signal resource within the multiple slots may also be different. In an implementation mode, the symbol distributions of all slots may be determined according to the symbols occupied by the positioning reference signal resource within each slot. Alternatively, the symbol distributions within all slots may be determined according to the starting symbol of the positioning reference signal resource within each slot (if only the starting symbols are different and the distributions of other symbols are the same).

Optionally, the symbol distributions of the positioning reference signal resource within the multiple slots may be determined according to symbol groups and a gap between the symbol groups. Specifically, in an implementation mode, positions of symbol groups within a current slot and other slots may be determined according to a position of a first symbol group of the positioning reference signal resource within a first slot and the gap between the symbol groups. Normally, in two adjacent slots for transmitting the positioning reference signal resource, a gap between a first symbol of the positioning reference signal resource within a later slot and a last symbol of the positioning reference signal resource within an earlier slot is equal to the gap between the symbol groups. Optionally, the gap is not less than the switching time between hops.

When the symbol distributions of the positioning reference signal resource within the multiple slots are determined according to the symbol groups and the gap between the symbol groups, if a certain determined symbol group exactly crosses slot boundaries, taking the first symbol group crossing a first slot (current slot) and a second slot (next slot) as an example, then,

if one part of a first symbol group is located within the first slot and the other part is located within the second slot, then, the first symbol group may be transmitted according to the symbol distributions of the first symbol group within the first slot and the second slot, that is, the first symbol group is transmitted according to the determined symbol position of the first symbol group;

alternatively, the first symbol group is transmitted at a starting symbol of the second slot, that is, the first symbol group is not transmitted within the first slot, but the first symbol group is transmitted within the second slot;

alternatively, the first symbol group is transmitted at a third symbol of the second slot, and a position of the third symbol is the same as a position of a first symbol for transmitting the positioning reference signal resource within the first slot;

alternatively, the first symbol group is transmitted at a fourth symbol of the second slot, and a position of the fourth symbol is the same as the position of the first symbol for transmitting the positioning reference signal resource within the first slot of the positioning reference signal resource;

alternatively, the first symbol group is transmitted as indicated by a network-side device or agreed by a protocol;

if the first symbol group is all located within the second slot, then,

the first symbol group may be transmitted according to the symbol distribution of the first symbol group within the second slot, that is, the first symbol group is transmitted according to the determined symbol position of the first symbol group.

In this embodiment of this application, in a case that the communication device performs hopping transmission within slots and between slots, it may further determine hop counts within slots and between slots according to at least one of the number of symbols in the symbol group, a symbol number within the positioning reference signal resource, a symbol group number, the number of slots in the slot group, a slot number within the positioning reference signal resource, and a slot group number. The hop counts are used for determining a positioning reference signal narrowband corresponding to each hopping transmission.

Optionally, as an embodiment, the hop counts within slots and between slots may be determined through the following formula:

$$n_{slot} = \left\lfloor l'/N_{symb}^{group} \right\rfloor + n' * N_{symb} / N_{symb}^{group},$$

where $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, n' is the slot number within the positioning reference signal resource, n' $\in \{0, 1, ..., N_{slot}-1\}$, and $N_{slot}$ is the number of slots occupied by the positioning reference signal resource.

Optionally, n' may be calculated according to the slot where the positioning reference signal resource is located.

In order to facilitate the understanding of how the communication device determines the mapping relationship between symbol numbers within the positioning reference signal resource and symbol positions of the positioning reference signal resource within one slot in the embodiments of this application, as well as the mapping tables used for determining the relative RE offsets, description will be made below by taking embodiments 1 to 3 as examples.

Embodiment 1: Determine a mapping relationship between symbol numbers within a positioning reference signal resource and symbol positions of the positioning reference signal resource within one slot according to at least one of a starting symbol, a first number of symbols, a gap duration, and the number of symbols in one symbol group (i.e., the first manner)

In an implementation mode, if gap durations between adjacent symbol groups are different (the gap durations may include multiple values or a group of values), the mapping relationship between symbol numbers within the positioning reference signal resource and symbol positions of the positioning reference signal resource within one slot may be determined through the following formula:

$$l = \sum_{n=0}^{\left\lfloor l'/N_{symb}^{group} \right\rfloor - 1} N_{symb}^{gap} + l' + l_0,$$

where $l$ is the symbol position of the positioning reference signal resource within one slot, $l_0$ is the starting symbol position of the positioning reference signal resource within one slot, $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, and $N_{symb}^{gap}$ is the gap duration with an index of n ( $N_{symb}^{gap\_0}$ corresponds to a first gap, $N_{symb}^{gap\_1}$ corresponds to a second gap, and so on, the number of gaps=the number of symbol groups-1). Optionally, $N_{symb}^{gap\_n}$ may be configured by a network-side device, and/or agreed by a protocol, and/or selected by a terminal.

In an implementation mode, if the numbers of symbols in different symbol groups within the slot are different, that is, the numbers of symbols in symbol groups include multiple values or a group of values, the mapping relationship between symbol numbers within the positioning reference signal resource and symbol positions of the positioning reference signal resource within one slot may be determined through the following formula:

$$l = \sum_{n=0}^{n'-1} N_{symb}^{gap\_n} + l' + l_0,$$

where $l$ is the symbol position of the positioning reference signal resource within one slot, $l_0$ is the starting symbol position of the positioning reference signal resource within one slot, $l'$ is the symbol number within the positioning reference signal resource, $l' \in \{0, 1, ..., N_{symb}-1\}$, $N_{symb}$ is the number of symbols of the positioning reference signal resource within one slot, n' is the group number of the symbol group corresponding to the symbol number $l'$ within the positioning reference signal resource (from 0, if the numbers of symbols in symbol groups are the same, $n' = \left\lfloor l'/N_{symb}^{group} \right\rfloor$ ), $N_{symb}^{group\_n}$ is the number of symbols in the symbol group with an index of n ( $N_{symb}^{group\_0}$ corresponds to a first symbol group, $N_{symb}^{group\_1}$ corresponds to a second symbol group, and so on), and $N_{symb}^{gap\_n}$ is the gap duration with an index of n.

Optionally, a mapping relationship between n' and $l'$ may be obtained through a table or formula. For example, the mapping relationship between n' and $l'$ may be determined according to Table 1 below:

Table 1

| n' | 0 | 1 | ... |
|----|---|---|-----|
| l' | 0, 1, 2, 3 | 4, 5, 6, 7 | ... |

Optionally, If multiple gap durations are the same (or there is only one gap duration), the above formula may be adjusted as: $l = n' * N_{symb}^{gap} + l' + l_0$ .

Optionally, in a special case, $N_{symb}^{group\_0}$ may have a different value from the numbers of symbols in other symbol groups, while the numbers of symbols in other symbol groups are the same. The value of $N_{symb}^{group\_0}$ is greater than the numbers of symbols in other symbol groups and is an integer multiple of the numbers of symbols in other symbol groups.

Embodiment 2: Determine relative RE offsets corresponding to different numbers of symbols of a positioning reference signal resource (or symbol numbers within the positioning reference signal resource) under different comb sizes during hopping transmission according to a first mapping table

In an implementation, if the first mapping table is a dedicated mapping table for hopping transmission, that is, it is not shared with an existing table and is a new table for hopping transmission, then the first mapping table may be as shown in Table 2 below:

Table 2

| $K_{TC}$ | $k_{offset}^0, ..., k_{offset}^{N_{symb}-1}$ | | | | | | |
|---|---|---|---|---|---|---|---|
| | $N_{symb}$=1 | $N_{symb}$=2 | $N_{symb}$=4 | $N_{symb}$=5 | $N_{symb}$=6 | $N_{symb}$=8 | $N_{symb}$=12 |
| 2 | 0 | 0, 1 | 0, 1, 0, 1 | - | 0, 1, 0, 1, 0, 1 | 0, 1, 0, 1, 0, 1, 0, 1 | - |
| | | 0, 0 | 0, 0, 0, 0 | 0, 0, 0, 0, 0 | 0, 0, 0, 0, 0, 0 | 0, 0, 0, 0, 0, 0, 0, 0 | - |
| 4 | - | 0, 2 | 0, 2, 1, 3 | - | | 0, 2, 1, 3, 0, 2, 1, 3 | 0, 2, 1, 3, 0, 2, 1, 3, 0, 2, 1, 3 |
| | - | - | 0, 2, 0, 2 | - | 0, 2, 0, 2, 0, 2 | 0, 2, 0, 2, 0, 2, 0, 2 | - |
| 8 | - | - | 0, 4, 2, 6 | - | | 0, 4, 2, 6, 1, 5, 3, 7 | 0, 4, 2, 6, 1, 5, 3, 7, 0, 4, 2, 6 |
| | - | - | - | - | - | 0, 4, 2, 6, 0, 4, 2, 6 | - |

where $K_{TC}$ is the comb size (comb size), and $k_{offset}^{l}$ ($l \in \{0, 1, ..., N_{symb}-1\}$, $N_{symb}$ is the number of symbols of the positioning reference signal resource within one slot) is a relative RE offset.

Under a specific comb size ($K_{TC}$) and a specific number of symbols ($N_{symb}$) (such as $K_{TC}$=4 and $N_{symb}$=8, or $K_{TC}$=8 and $N_{symb}$=8), if there are multiple relative RE offsets, the network indicates one thereof, or the UE determines one as agreed by a protocol.

When the UE determines one as agreed by a protocol, for example, when $K_{TC}$=8 and $N_{symb}$=8, there are two relative RE offsets, and the UE may determine to use {0, 4, 2, 6, 0, 4, 2, 6} as a relative RE offset during frequency hopping according to a relationship between relative RE offsets of symbol groups during frequency hopping (for example, relative RE offsets of multiple symbols are the same).

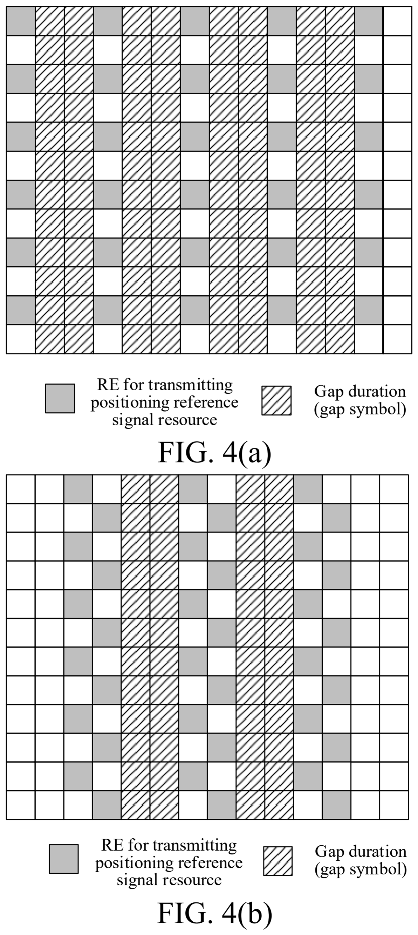

Optionally, a time-frequency mapping pattern shown in FIG. 4(a) corresponds to an RE offset {0, 0, 0, 0, 0} with the comb size $K_{TC}$ of 2 and the number of symbols $N_{symb}$ of 6; a time-frequency mapping pattern shown in FIG. 4(b) corresponds to an RE offset {0, 2, 0, 2, 0, 2} with the comb size $K_{TC}$ of 2 and the number of symbols $N_{symb}$ of 5, where a gap symbol is 2.

In an implementation, if the first mapping table is the same as a non-frequency hopping mapping table, then:

(1) The non-frequency hopping mapping table is completely reused as the first mapping table and does not undergo any extension, that is, a time-frequency mapping pattern of one slot during frequency hopping is determined based on a supported relative RE offset. For example, patterns with repetition may be used during frequency hopping, such as {0, 1, 0, 1}, {0, 2, 1, 3, 0, 2, 1, 3}, {0, 2, 1, 3, 0, 2, 1, 3, 0, 2, 1, 3}, and {0, 4, 2, 6, 1, 5, 3, 7, 0, 4, 2, 6}.

At this time, the first mapping table may be as shown in Table 3:

Table 3

| $K_{TC}$ | $k^0_{offset},...,k^{N_{symb}-1}_{offset}$ | | | | |
|---|---|---|---|---|---|
| | $N_{symb}=1$ | $N_{symb}=2$ | $N_{symb}=4$ | $N_{symb}=8$ | $N_{symb}=12$ |
| 2 | 0 | 0, 1 | 0, 1,0, 1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

where $K_{TC}$ is the comb size (comb size), and $k^{l'}_{offset}$ ($l'E$ {0, 1, ..., $N_{symb}$-1}, $N_{symb}$ is the number of symbols of the positioning reference signal resource within one slot) is a relative RE offset.

(2) The first mapping table is obtained by extending the existing table by adding new relative RE offsets based on the existing comb sizes and numbers of symbols, and/or adding new numbers of symbols and corresponding relative RE offsets under the new numbers of symbols. An exemplary table is as shown in Table 4 below, where bold parts are newly added relative RE offsets.

Table 4

| $K_{TC}$ | $k^0_{offset},...,k^{N_{symb}-1}_{offset}$ | | | | | |
|---|---|---|---|---|---|---|
| | $N_{symb}=1$ | $N_{symb}=2$ | $N_{symb}=4$ | $N_{symb}=6$ | $N_{symb}=8$ | $N_{symb}=12$ |
| 2 | 0 | 0, 1 | 0, 1, 0, 1 | 0, 1, 0, 1, 0, 1 | 0, 1, 0, 1, 0, 1, 0,1 | - |
| | | 0, 0 | 0, 0, 0, 0, | 0, 0, 0, 0, 0, 0 | 0, 0, 0, 0, 0, 0, 0, 0 | |
| 4 | - | 0, 2 | 0, 2, 1, 3 | | 0, 2, 1, 3, 0, 2, 1, 3 | 0, 2, 1, 3, 0, 2, 1, 3, 0, 2, 1, 3 |
| | | | 0, 2, 0, 2 | 0, 2, 0, 2, 0, 2 | 0, 2, 0, 2, 0, 2, 0, 2 | |
| 8 | - | - | 0, 4, 2, 6 | | 0, 4, 2, 6, 1, 5, 3, 7 | 0, 4, 2, 6, 1, 5, 3, 7, 0, 4, 2, 6 |
| | | | | | 0, 4, 2, 6, 0, 4, 2, 6 | |

where $K_{TC}$ is the comb size (comb size), and $k^{l'}_{offset}$ ($l' \in$ {0, 1, ..., $N_{symb}$-1}, $N_{symb}$ is the number of symbols of the positioning reference signal resource within one slot) is a relative RE offset. In Table 4, under a specific comb size ($K_{TC}$) and a specific number of symbols ($N_{symb}$) (e.g. $K_{TC}$=4, $N_{symb}$=8), if there are multiple relative RE offsets, the network indicates one thereof, or the UE determines one as agreed by a protocol.

Optionally, an embodiment of this application further provides another implementation of the first mapping table. In a case that the symbols of the positioning reference signal resource in one slot include a gap symbol, when determining the relative RE offset according to the first mapping table, the value of the relative RE offset corresponding to the gap symbol needs to be ignored. The first mapping table is as shown in Table 5 below:

Table 5

| $K_{TC}$ | $k^0_{offset},...,k^{N_{symb}-1}_{offset}$ | | | | | | |
|---|---|---|---|---|---|---|---|
| | $N_{symb}=1$ | $N_{symb}=2$ | $N_{symb}=4$ | $N_{symb}=5$ | $N_{symb}=6$ | $N_{symb}=8$ | $N_{symb}=12$ |
| 2 | 0 | 0, 1 | 0, 1,0, 1 | - | 0, 1,0, 1,0, 1 | 0, 1, 0, 1, 0, 1, 0, 1 | - |

(continued)

| $K_{TC}$ | $k_{offset}^0, ..., k_{offset}^{N_{symb}-1}$ | | | | | | |
|---|---|---|---|---|---|---|---|
| | $N_{symb}$=1 | $N_{symb}$=2 | $N_{symb}$=4 | $N_{symb}$=5 | $N_{symb}$=6 | $N_{symb}$=8 | $N_{symb}$=12 |
| 4 | - | 0, 2 | 0, 2, 1, 3 | - | | 0, 2, 1, 3, 0, 2, 1, 3 | 0, 2, 1, 3, 0, 2, 1, 3, 0, 2, 1, 3 |
| 8 | - | - | 0, 4, 2, 6 | - | | 0, 4, 2, 6, 1, 5, 3, 7 | 0, 4, 2, 6, 1, 5, 3, 7, 0, 4, 2, 6 |

where $K_{TC}$ is the comb size (comb size), and $k_{offset}^{l'}$ ($l' \in \{0, 1, ..., N_{symb}-1\}$, $N_{symb}$ is the number of symbols of the positioning reference signal resource within one slot) is a relative RE offset. In Table 5, taking $K_{TC}$ being 2 and $N_{symb}$ being 6 as an example, the network indicates that the gap symbols are 2, 3. Therefore, although the relative RE offsets are {0, 1, 0, 1, 0, 1}, the symbol numbers actually used for transmission are {0, 1, 4, 5}, and the relative RE offsets {0, 1} corresponding to the gap symbols therein need to be ignored.

In another implementation mode, special processing may be performed on the relative RE offsets of the gap symbols, such as "x", so that the values of the relative RE offsets corresponding to the gap symbols can be ignored, or it is indicated that the values of the relative RE offsets corresponding to the gap symbols are invalid, as shown in Table 6:

Table 6

| $K_{TC}$ | $k_{offset}^0, ..., k_{offset}^{N_{symb}-1}$ | | | | | | |
|---|---|---|---|---|---|---|---|
| | $N_{symb}$=1 | $N_{symb}$=2 | $N_{symb}$=4 | $N_{symb}$=5 | $N_{symb}$=6 | $N_{symb}$=8 | $N_{symb}$=12 |
| 2 | 0 | 0, 1 | 0, 1, 0, 1 | - | 0, 1, x, x, 0, 1 | 0, 1, 0, 1, 0, 1, 0, 1 | - |
| 4 | - | 0, 2 | 0, 2, 1, 3 | - | | 0, 2, 1, 3, 0, 2, 1, 3 | 0, 2, 1, 3, 0, 2, 1, 3, 0, 2, 1, 3 |
| 8 | - | - | 0, 4, 2, 6 | - | | 0, 4, 2, 6, 1, 5, 3, 7 | 0, 4, 2, 6, 1, 5, 3, 7, 0, 4, 2, 6 |

where $K_{TC}$ is the comb size (comb size), and $k_{offset}^{l'}$ ($l' \in \{0, 1, ..., N_{symb}-1\}$, $N_{symb}$ is the number of symbols of the positioning reference signal resource within one slot) is a relative RE offset. In Table 6, taking $K_{TC}$ being 2 and $N_{symb}$ being 6 as an example, the relative RE offsets corresponding to the gap symbols are represented by a special symbol "x", indicating that the corresponding relative RE offsets are invalid.

Embodiment 3: Determine relative RE offsets corresponding to symbol numbers of different symbol groups under different comb sizes during hopping transmission (relative RE offsets corresponding to each symbol in each symbol group under different comb sizes) according to a second mapping table

In an implementation mode, the second mapping table may be as shown in Table 7 below:

Table 7

| $K_{TC}$ | $k_{offset}^0, ..., k_{offset}^{N_{symb}^{group}-1}$ | | | | |
|---|---|---|---|---|---|
| | $N_{symb}^{group}=1$ | $N_{symb}^{group}=2$ | $N_{symb}^{group}=4$ | $N_{symb}^{group}=8$ | $N_{symb}^{group}=12$ |
| 2 | 0 | 0, 1 | 0, 1, 0, 1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

where $K_{TC}$ is the comb size (comb size), $N_{symb}^{group}$ is the number of symbols in the symbol group, and

$k_{offset}^{0},...,k_{offset}^{N_{symb}^{group}-1}$ are relative RE offsets of certain symbols in the symbol group relative to an RE of a first symbol in the symbol group.

Optionally, the RE offsets (i.e. comb offsets) of the first symbols in each symbol group within the positioning reference signal resource are the same.

Optionally, for a certain symbol, under a specific comb size ($K_{TC}$) and a specific number of symbols ( $N_{symb}^{group}$ ), if there are multiple relative RE offsets, the network indicates one thereof, or the UE determines one as agreed by a protocol.

Optionally, in this embodiment of this application, the relative RE offsets corresponding to the symbol numbers of the positioning reference signal or the symbol numbers of the symbol groups under different comb sizes in the first and/or second mapping tables may also be represented in the form of Table 8 in addition to the above tables, but the meaning of the table remains unchanged.

Table 8

| $K_{TC}$ | Symbol number within the PRS or SRS resource: $l'$ | | | | | | | | | | | |
|---|---|---|---|---|---|---|---|---|---|---|---|---|
| | **0** | **1** | **2** | **3** | **4** | **5** | **6** | **7** | **8** | **9** | **10** | **11** |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

$l'$ represents the symbol number within the positioning reference signal resource, $K_{TC}$ represents the comb size, and a corresponding relative RE offset can be found for each symbol number. Here, the value of relative RE offset is equivalent to the value of the relative RE offset in the previous tables. For example, in Table 8, under comb-4, 4 symbols, the relative RE offset values corresponding to symbol numbers 0, 1, 2, and 3 are respectively 0, 2, 1, and 3, which are equivalent to {0, 2, 1, 3} in the previous tables.

In the embodiments of this application, when sending or receiving a positioning reference signal resource for terminal positioning, symbols occupied by the positioning reference signal resource within one slot include at least one symbol group, and each symbol group includes one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops. In this way, since positioning reference signals can be sent or received through a hopping transmission manner, the effective bandwidth of the positioning reference signal can be improved, thus improving the positioning accuracy. In addition, since there are gap symbols between adjacent symbol groups occupied by the positioning reference signal resource within the slot, and the length of the gap symbols is not less than the switching time between hops, it can also facilitate radio frequency retuning between different hops, thus ensuring the effective transmission of the positioning reference signal resource.

An executive body of the method for transmitting the positioning reference signal resource provided in this embodiment of this application may be an apparatus for transmitting a positioning reference signal resource. An apparatus for transmitting a positioning reference signal resource provided in an embodiment of this application will be described by taking the apparatus for transmitting the positioning reference signal resource executing the method for transmitting the positioning reference signal resource as an example in this embodiment of this application.

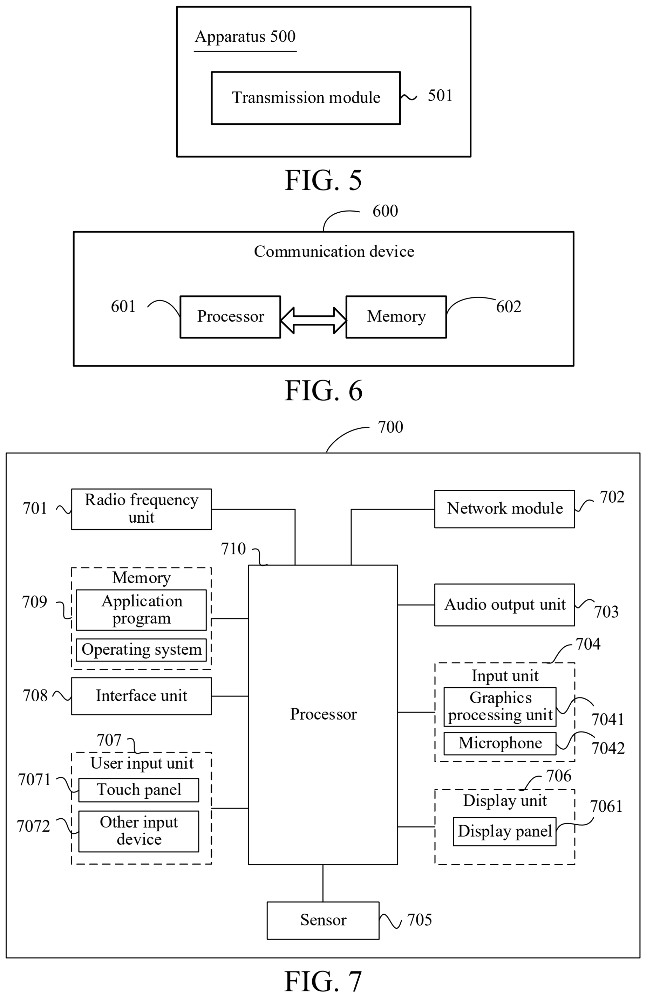

FIG. 5 is a schematic structural diagram of an apparatus for transmitting a positioning reference signal resource according to an embodiment of this application. The apparatus may correspond to the communication device in other embodiments. Referring to FIG. 5, the apparatus 500 includes:

a transmission module 501, configured to send or receive a positioning reference signal resource. Symbols occupied by the positioning reference signal resource within one slot include at least one symbol group. Each symbol group includes one or more consecutive symbols.

The at least one symbol group is used for hopping transmission of the positioning reference signal resource. There are gap symbols between adjacent symbol groups in a time domain. The gap symbols are not used for transmitting the positioning reference signal resource. The length of the gap symbols is not less than switching time between hops.

Optionally, as an embodiment, the number of symbols included in each of the at least one symbol group is the same, and relative resource element (RE) offsets corresponding to each of the at least one symbol group are the same; or the numbers of symbols included in different symbol groups of the at least one symbol group have an integer multiple relationship, relative RE offsets corresponding to symbol groups with the same number of symbols are the same, and a relative RE offset corresponding to a symbol group with more symbols includes a relative RE offset corresponding to a symbol group with fewer symbols.

Optionally, as an embodiment, the method further includes: not performing, by the communication device, hopping transmission of the positioning reference signal resource within the slot in at least one of the following cases:

the number of symbols included in one symbol group is the same as the number of symbols occupied by the positioning reference signal resource within one slot;
the positioning reference signal resource includes one symbol group within one slot;
the symbol group is not configured or defined.

Optionally, as an embodiment, in a case that a first symbol of the positioning reference signal resource and a second symbol of another signal or channel belong to different bandwidth parts BWPs, a gap between the first symbol and the second symbol is not less than the switching time between hops.

The first symbol is a 1st symbol occupied by the positioning reference signal resource within one slot, and the second symbol is a last symbol of the other signal or channel.

Optionally, as an embodiment, the apparatus 500 further includes a first determination module. The first determination module is configured to:
determine a mapping relationship between symbol numbers within the positioning reference signal resource and symbol positions of the positioning reference signal resource within one slot according to at least one of a first manner, a second manner, a third manner, and a fourth manner,

The first manner represents determining the mapping relationship according to at least one of a starting symbol, a first number of symbols, a gap duration, and a number of symbols in the symbol group.

The second manner represents determining the mapping relationship according to at least one of the starting symbol, a number of symbol groups, a starting symbol of each symbol group, and the number of symbols in the symbol group.

The third manner represents determining the mapping relationship according to at least one of the starting symbol, a second number of symbols, a starting position of the gap symbol, the gap duration, and the number of gaps.

The fourth manner represents determining the mapping relationship according to a bitmap manner.

Optionally, as an embodiment, the starting symbol represents a starting symbol position of the positioning reference signal resource within the slot.

The first number of symbols represents the number of symbols occupied by positioning reference signals within the slot.

The gap duration represents the number of gap symbols between adjacent symbol groups.

The number of symbols in the symbol group represents the number of consecutive symbols included in one symbol group.

The second number of symbols represents the number of symbols occupied by the positioning reference signal resource within the slot. The number of symbols includes the number of gap symbols within the positioning reference signal resource.

The starting position of the gap symbol represents a symbol starting position of one or more gaps within the slot.

The number of gaps represents the number of gaps between symbols occupied by the positioning reference signal resource or the number of gaps included in one slot.

Optionally, as an embodiment, the gap duration is equal to a difference between a symbol group gap and the number of symbols in the symbol group, and the symbol group gap is a gap between starting symbols in adjacent symbol groups.

Optionally, as an embodiment, the gap durations between adjacent symbol groups are the same or different, and in a case that the gap durations between adjacent symbol groups are different, the gap durations include multiple values.

Optionally, as an embodiment, the number of symbols in the symbol group is determined by at least one of:

determining according to the number of symbols occupied by the positioning reference signal resource within the slot and the number of symbol groups;
determining according to a repetition factor and the number of symbols occupied by one in-slot repetition, the repetition factor representing the number of in-slot repetitions included in one symbol group.

Optionally, as an embodiment, the numbers of symbols in different symbol groups are the same or different within the slot, and in a case that the numbers of symbols in symbol groups are different, the numbers of symbols in symbol groups include multiple values.

Optionally, as an embodiment, the first determination module is further configured to:

exclude the number of gap symbols included in the second number of symbols in the case of determining symbols actually occupied by the positioning reference signal resource according to the second number of symbols.

Optionally, as an embodiment, in a case that one gap is included within the slot, the starting position of the gap symbol is an offset of the gap relative to the first symbol of the slot, or an offset relative to the first symbol of the positioning reference signal resource, or an offset relative to a symbol of a previous or next positioning reference signal resource.

In a case that multiple gaps are included within the slot, the symbol starting position of each gap includes at least one of:

the offset relative to the first symbol of the slot, or the offset relative to the first symbol of the positioning reference signal resource, or the offset relative to the symbol of the previous or next positioning reference signal resource;
an offset relative to a first gap;
an offset relative to a previous gap.

Optionally, as an embodiment, for the first manner, the first determination module is configured to determine the mapping relationship through the following formulae:

$$l = \left\lfloor l' \big/ N_{symb}^{group} \right\rfloor * N_{symb}^{gap} + l' + l_0 \; ;$$

or

$$l' = \left\lfloor (l - l_0) \big/ \left( N_{symb}^{group} + N_{symb}^{gap} \right) \right\rfloor * N_{symb}^{group} + (l - l_0) \bmod \left( \left( N_{symb}^{group} + N_{symb}^{gap} \right) \right),$$

where $l$ is a symbol position of the positioning reference signal resource within one slot, $l_0$ is the starting symbol position of the positioning reference signal resource within one slot, $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, and $N_{symb}^{gap}$ is the gap duration.

Optionally, as an embodiment, for the second manner, the first determination module is configured to determine the mapping relationship through the following formula:

$$l' = \left\lfloor (l - l_0) \big/ N_{symb}^{interval} \right\rfloor + (l - l_0) \bmod \left( N_{symb}^{interval} \right),$$

where $l'$ is the symbol number within the positioning reference signal resource, $l' \in \{0, 1, ..., N_{symb}-1\}$, $N_{symb}$ is the number of symbols of the positioning reference signal resource within one slot, $l$ is a symbol position of the positioning reference signal resource within one slot, $l_0$ is the starting symbol position of the positioning reference signal resource within one slot, and $N_{symb}^{interval}$ is a gap between starting symbols of symbol groups.

Optionally, as an embodiment, the first determination module is further configured for the following:

in a case that the mapping relationship is determined according to the third manner, the symbol number within the positioning reference signal resource includes a symbol number of gap symbols within the slot.

Optionally, as an embodiment, for the fourth manner, the length of the bitmap is the number of symbols within one slot. A bit with a value of 1 in the bitmap is used for the transmission of the positioning reference signal resource. A bit with a value of 0 is not used for the transmission of the positioning reference signal resource.

In the bitmap, the symbol group is represented by consecutive bits with a value of 1. A gap between symbol groups is represented by a bit with a value of 0 between symbol groups.

Optionally, as an embodiment, the symbol number within the positioning reference signal resource is a symbol number obtained by sequentially arranging the bits with a value of 1 in the bitmap; and/or,

the symbol number within the symbol group is a symbol number obtained by sequentially arranging the consecutive bits with a value of 1 in the symbol group.

Optionally, as an embodiment, the first determination module is further configured to:

determine a hop count within the slot according to at least one of the number of symbols in the symbol group, the symbol number within the positioning reference signal resource, a symbol group number, the gap duration, and the starting position of the gap symbol. The hop count is used for determining a positioning reference signal narrowband corresponding to hopping transmission.

Optionally, as an embodiment, the first determination module is configured to determine the hop count within the slot through the following formulae:

$$n = \left\lfloor l' \middle/ N_{symb}^{group} \right\rfloor, \text{ or, } \quad n = n_{group},$$

where $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, and $n_{group}$ is the symbol group numbers within the slot.

Optionally, as an embodiment, the apparatus 500 further includes a second determination module. The second determination module is configured to:

determine relative RE offsets corresponding to the symbols of the positioning reference signal resource under different comb sizes during hopping transmission according to a first mapping table among symbol numbers within the positioning reference signal resource, the comb sizes, and the relative RE offsets; and/or,
determine relative RE offsets corresponding to the symbols in the symbol group under different comb sizes during hopping transmission according to a second mapping table among symbol numbers in the symbol group, the comb sizes, and the relative RE offsets.

Optionally, as an embodiment, the first mapping table is used for hopping transmission, or a non-frequency hopping mapping table is reused as the first mapping table, or the first mapping table is a mapping table obtained through extension based on the non-frequency hopping mapping table.

The non-frequency hopping mapping table is a mapping table among the symbol numbers within the positioning reference signal resource, the comb sizes, and the relative RE offsets when not used for hopping transmission.

Optionally, as an embodiment, the extension based on the non-frequency hopping mapping table includes at least one of:

adding corresponding new relative RE offsets for existing numbers of symbols and comb sizes in the non-frequency hopping mapping table;
adding a new number of symbols, a new comb, and relative RE offsets corresponding to the new number of symbols and the new comb size to the non-frequency hopping mapping table.

Optionally, as an embodiment, in the first mapping table, one or more relative RE offsets correspond to a comb size and a number of symbols of the positioning reference signal resource.

In a case that multiple relative RE offsets correspond to a comb size and a number of symbols of the positioning reference signal resource, a network-side device indicates one of the multiple relative RE offsets, or a terminal determines one thereof as agreed by a protocol.

Optionally, as an embodiment, the second determination module is further configured to:

in a case that the number of symbols of the positioning reference signal resource includes a gap symbol, ignore the relative RE offset corresponding to the gap symbol when determining the relative RE offset according to the first mapping table; and/or,
in a case that the number of symbols of the positioning reference signal resource includes a gap symbol, the relative RE offset corresponding to the gap symbol is an invalid value.

Optionally, as an embodiment, in the second mapping table, one or more relative RE offsets correspond to a comb size and a number of symbols in the symbol group.

In a case that multiple relative RE offsets correspond to a comb size and a number of symbols in the symbol group, a network-side device indicates one of the multiple RE offsets, or a terminal determines one thereof as agreed by a protocol.

Optionally, as an embodiment, in the second mapping table, the relative RE offsets are relative RE offsets of symbols in the symbol group relative to a first symbol in the symbol group, or relative RE offsets of symbols in the symbol group relative to a first symbol of the positioning reference signal resource within the slot.

Optionally, as an embodiment, the RE offsets of first symbols of each symbol group within the positioning reference signal resource are the same or different, and in the case of being different, the RE offset of the first symbol of each symbol group is indicated by a network-side device or agreed by a protocol.

Optionally, as an embodiment, the transmission module 501 is further configured to:
send or receive the positioning reference signal resource on multiple slots. The multiple slots are located in one cycle of the positioning reference signal resource. The positioning reference signal resources on the multiple slots correspond to the same positioning reference signal resource identifier.

Optionally, as an embodiment, the number of the multiple slots is indicated by a network-side device, and/or agreed by a protocol, and/or selected by a terminal.

If a positioning reference signal is an uplink positioning reference signal, the multiple slots include uplink slots, or uplink slots and flexible slots. If the positioning reference signal is a downlink positioning reference signal, the multiple slots include downlink transmission slots, or downlink slots and flexible slots.

Optionally, as an embodiment, the multiple slots are consecutive or non-consecutive in the time domain. In the case of being non-consecutive, gaps between the multiple slots are the same or different.

In a case that the gaps between the multiple slots are the same, a position of each slot is determined according to a slot offset of a starting slot and slot offsets of adjacent slots or a slot gap

In a case that the gaps between the multiple slots are different, the position of each slot is determined according to a slot offset of each slot, or determined according to the slot offset of the starting slot and slot offsets of other slots relative to the starting slot.

Optionally, as an embodiment, the multiple slots include at least one slot group. The at least one slot group is used for hopping transmission of the positioning reference signal resource between slots. Adjacent slot groups in the time domain have a gap with a length not less than the switching time between hops.

Each slot group includes at least one slot. The at least one slot is arranged sequentially. The number of the at least one slot is indicated by a network-side device, and/or agreed by a protocol, and/or selected by a terminal.

Optionally, as an embodiment, the method further includes, not performing, by the communication device, hopping transmission of the positioning reference signal resource between slots in at least one of the following cases:

the number of slots included in one slot group is the same as the number of slots of the positioning reference signal resource in one cycle;
the positioning reference signal resource includes one slot group in one cycle;
the slot group is not configured or defined.

Optionally, as an embodiment, time-frequency mapping patterns within slots of multiple slots in one slot group are the same.

Optionally, as an embodiment, slot distributions of the multiple slot groups are the same, and a time domain position of each slot in the multiple slot groups is determined according to a gap between slots within each slot group and a gap between slot groups.

Optionally, as an embodiment, the apparatus further includes a third determination module. The third determination module is configured to:
determine a hop count between slots according to at least one of the number of slots in the slot group, a slot number within the positioning reference signal resource, and a slot group number. The hop count between slots is used for determining a positioning reference signal narrowband corresponding to each hopping transmission.

Optionally, as an embodiment, the transmission module 501 is further configured to:
in a case that the positioning reference signal resource is configured with frequency hopping within slots and the positioning reference signal resource includes multiple slots, perform frequency hopping within slots and between slots according to a symbol distribution of the positioning reference signal resource within each slot.

Optionally, as an embodiment, the symbol distributions of the positioning reference signal resource within the multiple slots are the same.

Optionally, as an embodiment, the transmission module 501 is further configured to:
determine the symbol distributions of the positioning reference signal resource within the multiple slots according to symbol groups and a gap between the symbol groups.

Optionally, as an embodiment, the transmission module 501 is configured to:
determine positions of symbol groups within a current slot and other slots according to a position of a first symbol group of the positioning reference signal resource within a first slot and the gap between the symbol groups.

Optionally, as an embodiment, in two adjacent slots for transmitting the positioning reference signal, a gap between a first symbol of the positioning reference signal resource within a later slot and a last symbol of the positioning reference signal resource within an earlier slot is equal to the gap between the symbol groups and not less than the switching time between hops.

Optionally, as an embodiment, according to a symbol group gap, in a case that the determined first symbol group is located within the first slot and a second slot, the transmission module 501 is further configured for any one of:

transmitting the first symbol group according to the symbol distributions of the first symbol group within the first slot and the second slot;
transmitting the first symbol group at a starting symbol of the second slot;
transmitting the first symbol group at a third symbol of the second slot, a position of the third symbol being the same as a position of a first symbol for transmitting the positioning reference signal resource within the first slot;
transmitting the first symbol group at a fourth symbol of the second slot, a position of the fourth symbol being the same as the position of the first symbol for transmitting the positioning reference signal resource within the first slot of the positioning reference signal resource;
transmitting the first symbol group as indicated by a network-side device or agreed by a protocol.

Optionally, the starting symbol position of the positioning reference signal resource in the slot configured by the network only acts on the starting symbol of the first symbol group within the multiple slots occupied by the positioning reference signal resource.

Optionally, as an embodiment, the apparatus 500 further includes a fourth determination module. The fourth determination module is configured to:
determine hop counts within slots and between slots according to at least one of the number of symbols in the symbol group, a symbol number within the positioning reference signal resource, a symbol group number, the number of slots in the slot group, a slot number within the positioning reference signal resource, and a slot group number.

Optionally, as an embodiment, the fourth determination module is configured to determine the hop counts within slots and between slots through the following formula:

$$ n_{slot} = \left\lfloor l' \big/ N_{symb}^{group} \right\rfloor + n' * N_{symb} \big/ N_{symb}^{group} , $$

where $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, n' is the slot number within the positioning reference signal resource, n' $\in \{0, 1, ..., N_{slot}-1\}$, and $N_{slot}$ is the number of slots occupied by the positioning reference signal resource.

For the apparatus 500 according to this embodiment of this application, a reference may be made to the processes of the method 300 corresponding to this embodiment of this application. In addition, various units/modules and other operations and/or functions in the apparatus 500 are respectively intended to implement the corresponding processes in the method 300, and can achieve the same or equivalent technical effects, which will not be repeated here for the sake of conciseness.

In this embodiment of this application, the apparatus for transmitting the positioning reference signal resource may be an electronic device, such as an electronic device with an operating system, or a component in an electronic device, such as an integrated circuit or a chip. The electronic device may be a terminal or any other device except the terminal. Exemplarily, the terminal may include, but is not limited to, the type of the terminal 11 listed above, and the other device may be a server, a network attached storage (Network Attached Storage, NAS) or the like, which is not specifically limited in this embodiment of this application.

The apparatus for transmitting the positioning reference signal resource provided in this embodiment of this application can implement the various processes implemented in the method embodiment shown in FIG. 3 and achieve the same technical effect, which will not be repeated here in order to avoid repetition.

Optionally, referring to FIG. 6, an embodiment of this application further provides a communication device 600, which includes a processor 601 and a memory 602. A program or instruction runnable on the processor 601 is stored on the memory 602. For example, when the communication device 600 is a terminal, the program or instruction, when executed by the processor 601, implements the various steps of the embodiment of the method for transmitting the positioning reference signal resource, and can achieve the same technical effects. When the communication device 600 is a network-side device, the program or instruction, when executed by the processor 601, implements the various steps of the embodiment of the method for transmitting the positioning reference signal resource, and can achieve the same technical effects, which will not be repeated here in order to avoid repetition.

An embodiment of this application further provides a communication device, which includes a processor and a communication interface. The communication interface is configured to send or receive a positioning reference signal resource. Symbols occupied by the positioning reference signal resource within a slot include at least one symbol group. Each symbol group includes one or more consecutive symbols. The at least one symbol group is used for hopping transmission of the positioning reference signal resource. There are gap symbols included between adjacent symbol groups in a time domain. The gap symbols are not used for transmitting the positioning reference signal resource. The length of the gap symbols is not less than switching time between hops. This communication device embodiment corresponds to the above communication device side method embodiment. The various implementation processes and modes in the above method embodiment are applicable to this communication device embodiment, and can achieve the same technical effect. Specifically, FIG. 7 is a schematic diagram of a hardware structure of a communication device according to an embodiment of this application.

The communication device 700 includes, but is not limited to, at least part of components such as a radio frequency unit 701, a network module 702, an audio output unit 703, an input unit 704, a sensor 705, a display unit 706, a user input unit 707, an interface unit 708, a memory 709, and a processor 710.

It can be understood by those skilled in the art that the communication device 700 may further include a power supply (such as a battery) for supplying power to the components. The power supply may be logically connected to the processor 710 by a power supply management system, thus implementing functions such as charging, discharging, and power consumption management by using the power supply management system. The communication device structure shown in FIG. 7 constitutes no limitation on the communication device, and the communication device may include more or fewer components than those shown therein, or some components may be combined, or a different component deployment may be used, which will not be repeated here.

It is to be understood that in the embodiments of this application, the input unit 704 may include a graphics processing unit (Graphics Processing Unit, GPU) 7041 and a microphone 7042. The GPU 7041 performs processing on image data of a static picture or a video that is obtained by an image acquisition device (for example, a camera) in a video acquisition mode or an image acquisition mode. The display unit 706 may include a display panel 7061. The display panel 7061 may be configured in the form of a liquid crystal display, an organic light emitting diode, or the like. Specifically, the user input unit 707 includes at least one of a touch panel 7071 and another input device 7072. The touch panel 7071 is also known as a touch screen. The touch panel 7071 may include two parts, namely a touch detection apparatus and a touch controller. The other input device 7072 may include, but is not limited to, a physical keyboard, a functional key (such as a volume control key or an on/off key), a track ball, a mouse, and a joystick, which will not be repeated here.

In this embodiment of this application, the radio frequency unit 701 receives downlink data from the network-side device and then transmits it to the processor 710 for processing. In addition, the radio frequency unit 701 may send uplink data to the network-side device. Generally, the radio frequency unit 701 includes, but is not limited to, an antenna, an amplifier, a transceiver, a coupler, a low noise amplifier, a duplexer, and the like.

The memory 709 may be configured to store a software program or instruction and various data. The memory 709 may mainly include a first storage area for storing a program or instruction and a second storage area for storing data. The first storage area may store an operating system, an application program or instruction required by at least one function (for example, a sound playback function or an image display function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 709 in this embodiment of this application includes, but is not limited to, these memories and any other suitable types of memories.

The processor 710 may include one or more processing units. Optionally, the processor 710 integrates an application processor and a modem processor. The application processor mainly processes operations of an operating system, a user interface, an application program and the like. The modem processor mainly processes wireless communication signal, which, for example, is a baseband processor. It is to be understood that the foregoing modem processor may not be integrated into the processor 710.

The radio frequency unit 701 is configured to send or receive a positioning reference signal resource. Symbols occupied by the positioning reference signal resource within one slot include at least one symbol group. Each symbol group includes one or more consecutive symbols.

The at least one symbol group is used for hopping transmission of the positioning reference signal resource. There are gap symbols included between adjacent symbol groups in a time domain. The gap symbols are not used for transmitting the positioning reference signal resource. The length of the gap symbols is not less than switching time between hops.

In the embodiments of this application, when sending or receiving a positioning reference signal resource for terminal positioning, symbols occupied by the positioning reference signal resource within one slot include at least one symbol group, and each symbol group includes one or more consecutive symbols, where the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops. In this way, since positioning reference signals can be sent or received through a hopping transmission manner, the effective bandwidth of the positioning reference signal can be improved, thus improving the positioning accuracy. In addition, since there are gap symbols between adjacent symbol groups occupied by the positioning reference signal resource within the slot, and the length of the gap symbols is not less than the switching time between hops, it can also facilitate radio frequency retuning between different hops, thus ensuring the effective transmission of the positioning reference signal resource.

The communication device 700 provided in this embodiment of this application can implement the various processes implemented in the embodiment shown in FIG. 3 and achieve the same technical effects, which will not be repeated here in order to avoid repetition.

An embodiment of this application further provides a communication device, which includes a processor and a communication interface. The communication interface is configured to send or receive a positioning reference signal resource. Symbols occupied by the positioning reference signal resource within one slot include at least one symbol group. Each symbol group includes one or more consecutive symbols. The at least one symbol group is used for hopping transmission of the positioning reference signal resource. There are gap symbols between adjacent symbol groups in a time domain. The gap symbols are not used for transmitting the positioning reference signal resource. The length of the gap symbols is not less than switching time between hops. This communication device embodiment corresponds to the above communication device method embodiment. The various implementation processes and modes in the above method embodiment are applicable to this communication device embodiment, and can achieve the same technical effect.

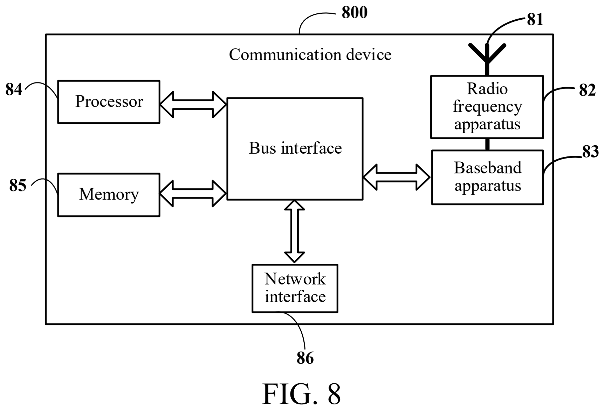

Specifically, an embodiment of this application further provides a communication device. Referring to FIG. 8, the communication device 800 includes an antenna 81, a radio frequency apparatus 82, a baseband apparatus 83, a processor 84, and a memory 85. The antenna 81 is connected with the radio frequency apparatus 82. In an uplink direction, the radio frequency apparatus 82 receives information through the antenna 81 and sends the received information to the baseband apparatus 83 for processing. In a downlink direction, the baseband apparatus 83 processes the information to be sent and sends it to the radio frequency apparatus 82. The radio frequency apparatus 82 processes the received information and sends it out through the antenna 81.

The method executed by the communication device in the above embodiment may be implemented in the baseband apparatus 83. The baseband apparatus 83 includes a baseband processor.

The baseband apparatus 83 may include, for example, at least one baseband board. Multiple chips are provided on the baseband board. Referring to FIG. 8, one chip, for example, is the baseband processor connected with the memory 85 through a bus interface and configured to call a program in the memory 85 and perform operations on the communication device shown in the method embodiment.

The communication device may further include a network interface 86. The interface is, for example, a common public radio interface (Common Public Radio Interface, CPRI).

Specifically, the communication device 800 in this embodiment of this application further includes an instruction or program stored in the memory 85 and runnable on the processor 84. The processor 84 calls the instruction or program in the memory 85 to implement the method implemented by each module shown in FIG. 5 and achieve the same technical effect, which will not be repeated here in order to avoid repetition.

An embodiment of this application further provides a readable storage medium. A program or instruction is stored on the readable storage medium. The program or instruction, when executed by the processor, implements the various processes of the embodiment of the method for transmitting the positioning reference signal resource, and can achieve the same technical effect, which will not be repeated here in order to avoid repetition.

The processor is a processor in the terminal in the above embodiment. The readable storage medium includes a computer-readable storage medium, such as a computer Read-Only Memory (ROM), a Random Access Memory (RAM), a magnetic disk, an optical disc, or the like.

An embodiment of this application further provides a chip. The chip includes a processor and a communication interface coupled to the processor. The processor is configured to run a program or instruction to implement the various processes of the embodiment of the method for transmitting the positioning reference signal resource, and can achieve the same technical effect, which will not be repeated here in order to avoid repetition.

It is to be understood that the chip mentioned in this embodiment of this application may also be referred to as a system level chip, a system chip, a chip system, or a system on chip.

An embodiment of this application further provides a computer program/program product. The computer program/program product is stored on a storage medium. The computer program/program product, when executed by at least one processor, implements the various processes of the embodiment of the method for transmitting the positioning reference signal resource, and can achieve the same technical effect, which will not be repeated here in order to avoid repetition.

It is to be understood that the terms "include", "comprise", or any other variation thereof herein are intended to cover a non-exclusive inclusion, so that a process, method, article or apparatus that includes a series of elements not only includes those elements, but also includes other elements that are not explicitly listed or are inherent to such a process, method, article or apparatus. Without further limitations, the element limited by the statement "including a..." does not preclude the presence of another identical element in a process, method, article or apparatus that includes that element. In addition, the scope of the methods and apparatuses in the embodiments of this application is not limited to performing functions in the order shown or discussed, but may also include performing functions in a substantially simultaneous manner or in the opposite order according to the involved functions. For example, the described methods may be executed in a different order from the described ones, and various steps may also be added, omitted, or combined. In addition, features described with reference to certain examples may be combined in other examples.

Through the description of the above implementations, those skilled in the art can clearly understand that the methods of the above embodiments may be implemented through software and necessary universal hardware platforms. Certainly, they may also be implemented through hardware. However, in many cases, the former is better. Based on this understanding, the technical solution of this application essentially, or the part that contributes to the existing technology, may be reflected in the form of a computer software product, which is stored in a storage medium (such as an ROM/RAM, a magnetic disc, or an optical disc), including several instructions to enable a terminal (which may be a mobile phone, a computer, a server, an air conditioner, or a network device) to execute the methods described in the embodiments of this application.

The embodiments of this application have been described above with reference to the accompanying drawings. However, this application is not limited to the specific implementations above. The specific implementations above are only exemplary rather than restrictive. Under the inspiration of this application, those skilled in the art may make many variations without departing from the essence of this application and the scope of protection of claims, which, however, still fall within the scope of protection of this application.

## Claims

1.  A method for transmitting a positioning reference signal resource, comprising:

    sending or receiving, by a communication device, a positioning reference signal resource, symbols occupied by the positioning reference signal resource within a slot comprising at least one symbol group, each symbol group comprising one or more consecutive symbols,
    wherein the at least one symbol group is used for hopping transmission of the positioning reference signal resource, there are gap symbols between adjacent symbol groups in a time domain, the gap symbols are not used for transmitting the positioning reference signal resource, and the length of the gap symbols is not less than switching time between hops.

2.  The method according to claim 1, wherein the number of symbols in each of the at least one symbol group is same, and relative resource element (RE) offsets corresponding to each of the at least one symbol group are the same; or
    the numbers of symbols in different symbol groups of the at least one symbol group have an integer multiple relationship, relative RE offsets corresponding to symbol groups with the same number of symbols are the same, and a relative RE offset corresponding to a symbol group with more symbols comprises a relative RE offset corresponding to a symbol group with fewer symbols.

3.  The method according to claim 1, wherein not performing, by the communication device, hopping transmission of the positioning reference signal resource within the slot in at least one of the following cases:

    the number of symbols in one symbol group is same as the number of symbols occupied by the positioning reference signal resource within one slot;
    the positioning reference signal resource comprises one symbol group within one slot;
    the symbol group is not configured or defined.

4.  The method according to claim 1, wherein in a case that a first symbol of the positioning reference signal resource and a second symbol of another signal or channel belong to different bandwidth parts BWPs, a gap between the first symbol and the second symbol is not less than the switching time between hops,
    wherein the first symbol is 1st symbol occupied by the positioning reference signal resource within one slot, and the second symbol is a last symbol of the other signal or channel.

**5.** The method according to claim 1, wherein the method further comprises:

determining, by the communication device, a mapping relationship between symbol numbers within the positioning reference signal resource and symbol positions of the positioning reference signal resource within one slot according to at least one of a first manner, a second manner, a third manner, and a fourth manner, wherein the first manner represents determining the mapping relationship according to at least one of a starting symbol, a first number of symbols, a gap duration, and a number of symbols in the symbol group;

the second manner represents determining the mapping relationship according to at least one of the starting symbol, a number of symbol groups, a starting symbol of each symbol group, and the number of symbols in the symbol group;

the third manner represents determining the mapping relationship according to at least one of the starting symbol, a second number of symbols, a starting position of the gap symbol, the gap duration, and the number of gaps;

the fourth manner represents determining the mapping relationship according to a bitmap manner.

**6.** The method according to claim 5, wherein

the starting symbol represents a starting symbol position of the positioning reference signal resource within the slot;

the first number of symbols represents the number of symbols occupied by positioning reference signals within the slot;

the gap duration represents the number of gap symbols between adjacent symbol groups; the number of symbols in the symbol group represents the number of consecutive symbols in one symbol group;

the second number of symbols represents the number of symbols occupied by the positioning reference signal resource within the slot, and the number of symbols comprises the number of gap symbols within the positioning reference signal resource;

the starting position of the gap symbol represents a symbol starting position of one or more gaps within the slot;

the number of gaps represents the number of gaps between symbols occupied by the positioning reference signal resource or the number of gaps comprised within one slot.

**7.** The method according to claim 6, wherein
the gap duration is equal to a difference between a symbol group gap and the number of symbols in the symbol group, and the symbol group gap is a gap between starting symbols in adjacent symbol groups.

**8.** The method according to claim 6, wherein
the gap durations between adjacent symbol groups are the same or different, and in a case that the gap durations between adjacent symbol groups are different, the gap durations comprise a plurality of values.

**9.** The method according to claim 6, wherein the number of symbols in the symbol group is determined by at least one of:

determining according to the number of symbols occupied by the positioning reference signal resource within the slot and the number of symbol groups;

determining according to a repetition factor and the number of symbols occupied by one in-slot repetition, the repetition factor representing the number of in-slot repetitions in one symbol group.

**10.** The method according to claim 6, wherein
the numbers of symbols in different symbol groups are the same or different within the slot, and in a case that the numbers of symbols in symbol groups are different, the numbers of symbols in symbol groups comprise a plurality of values.

**11.** The method according to claim 6, wherein the method further comprises:
excluding, by the communication device, the number of gap symbols in the second number of symbols in the case of determining symbols actually occupied by the positioning reference signal resource according to the second number of symbols.

**12.** The method according to claim 6, wherein in a case that one gap is comprised within the slot, the starting position of the gap symbol is an offset of the gap relative to a first symbol of the slot, or an offset relative to a first symbol of the positioning reference signal resource, or an offset relative to a symbol of a previous or next positioning reference signal resource;

in a case that a plurality of gaps are comprised within the slot, the symbol starting position of each gap comprises at least one of:

> the offset relative to the first symbol of the slot, or the offset relative to the first symbol of the positioning reference signal resource, or the offset relative to the symbol of the previous or next positioning reference signal resource;
> an offset relative to a first gap;
> an offset relative to a previous gap.

13. The method according to claim 5, wherein for the first manner, the communication device determines the mapping relationship through the following formulae:

$$l = \left\lfloor l' / N_{symb}^{group} \right\rfloor * N_{symb}^{gap} + l' + l_0 \;;$$

or

$$l' = \left\lfloor (l - l_0) / \left( N_{symb}^{group} + N_{symb}^{gap} \right) \right\rfloor * N_{symb}^{group} + (l - l_0) \bmod \left( \left( N_{symb}^{group} + N_{symb}^{gap} \right) \right),$$

wherein $l$ is a symbol position of the positioning reference signal resource within one slot, $l_0$ is the starting symbol position of the positioning reference signal resource within one slot, $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, and $N_{symb}^{gap}$ is the gap duration.

14. The method according to claim 5, wherein for the second manner, the communication device determines the mapping relationship through the following formula:

$$l' = \left\lfloor (l - l_0) / N_{symb}^{\mathrm{int}erval} \right\rfloor + (l - l_0) \bmod \left( N_{symb}^{\mathrm{int}erval} \right),$$

wherein $l'$ is the symbol number within the positioning reference signal resource, $l' \in \{0, 1, ..., N_{symb}-1\}$, $N_{symb}$ is the number of symbols of the positioning reference signal resource within one slot, $l$ is a symbol position of the positioning reference signal resource within one slot, $l_0$ is the starting symbol position of the positioning reference signal resource within one slot, and $N_{symb}^{\mathrm{int}erval}$ is a gap between starting symbols of symbol groups.

15. The method according to claim 6, wherein the method further comprises:
in a case that the communication device determines the mapping relationship according to the third manner, the symbol number within the positioning reference signal resource comprises a symbol number of gap symbols within the slot.

16. The method according to claim 5, wherein for the fourth manner, the length of the bitmap is the number of symbols within one slot, a bit with a value of 1 in the bitmap is used for the transmission of the positioning reference signal resource, and a bit with a value of 0 is not used for the transmission of the positioning reference signal resource, wherein in the bitmap, the symbol group is represented by consecutive bits with a value of 1, and a gap between symbol groups is represented by a bit with a value of 0 between symbol groups.

17. The method according to claim 16, wherein the symbol number within the positioning reference signal resource is a symbol number obtained by sequentially arranging the bits with a value of 1 in the bitmap; and/or,
the symbol number within the symbol group is a symbol number obtained by sequentially arranging the consecutive bits with a value of 1 in the symbol group.

18. The method according to claim 5, wherein the method further comprises:
determining, by the communication device, a hop count within the slot according to at least one of the number of symbols in the symbol group, the symbol number within the positioning reference signal resource, a symbol group number, the gap duration, and the starting position of the gap symbol, the hop count being used for determining a positioning reference signal narrowband corresponding to hopping transmission.

19. The method according to claim 18, wherein the communication device determines the hop count within the slot through the following formulae:

$$n = \left\lfloor l' / N_{symb}^{group} \right\rfloor, \text{ or, } n = n_{group},$$

wherein $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, and $n_{group}$ is a symbol group number within the slot.

20. The method according to claim 1, wherein the method further comprises:

determining, by the communication device, relative RE offsets corresponding to the symbols of the positioning reference signal resource under different comb sizes during hopping transmission according to a first mapping table among symbol numbers within the positioning reference signal resource, the comb sizes, and the relative RE offsets; and/or,
determining, by the communication device, relative RE offsets corresponding to the symbols in the symbol group under different comb sizes during hopping transmission according to a second mapping table among symbol numbers in the symbol group, the comb sizes, and the relative RE offsets.

21. The method according to claim 20, wherein the first mapping table is used for hopping transmission, or a non-frequency hopping mapping table is reused as the first mapping table, or the first mapping table is a mapping table obtained through extension based on the non-frequency hopping mapping table,
wherein the non-frequency hopping mapping table is a mapping table among the symbol numbers within the positioning reference signal resource, the comb sizes, and the relative RE offsets when not used for hopping transmission.

22. The method according to claim 21, wherein the extension based on the non-frequency hopping mapping table comprises at least one of:

adding corresponding new relative RE offsets for existing numbers of symbols and comb sizes in the non-frequency hopping mapping table;
adding a new number of symbols, a new comb, and relative RE offsets corresponding to the new number of symbols and the new comb size to the non-frequency hopping mapping table.

23. The method according to claim 21, wherein in the first mapping table, one or more relative RE offsets correspond to a comb size and a number of symbols of the positioning reference signal resource,
wherein in a case that a plurality of corresponding relative RE offsets are comprised, a network-side device indicates one of the plurality of relative RE offsets, or a terminal determines one thereof as agreed by a protocol.

24. The method according to claim 20, wherein the method further comprises:

in a case that the number of symbols of the positioning reference signal resource comprises a gap symbol, the communication device ignores the relative RE offset corresponding to the gap symbol when determining the relative RE offset according to the first mapping table; and/or,
in a case that the number of symbols of the positioning reference signal resource comprises a gap symbol, the relative RE offset corresponding to the gap symbol is an invalid value.

25. The method according to claim 20, wherein in the second mapping table, one or more relative RE offsets correspond to a comb size and a number of symbols in the symbol group,
wherein in a case that a plurality of relative RE offsets correspond to a comb size and a number of symbols in the symbol group, a network-side device indicates one of the plurality of RE offsets, or a terminal determines one thereof as agreed by a protocol.

26. The method according to claim 20, wherein in the second mapping table, the relative RE offsets are relative RE offsets of symbols in the symbol group relative to a 1st symbol in the symbol group, or relative RE offsets of symbols in the symbol group relative to a 1st symbol of the positioning reference signal resource within the slot.

27. The method according to claim 20, wherein the RE offsets of first symbols of each symbol group within the positioning reference signal resource are the same or different, and in the case of being different, the RE offset of the first symbol of each symbol group is indicated by a network-side device or agreed by a protocol.

28. The method according to claim 1, wherein the method further comprises:
sending or receiving, by the communication device, the positioning reference signal resource on a plurality of slots, the plurality of slots being located in one cycle of the positioning reference signal resource, the positioning reference signal resources on the plurality of slots corresponding to a same positioning reference signal resource identifier.

29. The method according to claim 28, wherein the number of the plurality of slots is indicated by a network-side device, and/or agreed by a protocol, and/or selected by a terminal,
wherein, if a positioning reference signal is an uplink positioning reference signal, the plurality of slots comprise uplink slots, or uplink slots and flexible slots; if the positioning reference signal is a downlink positioning reference signal, the plurality of slots comprise downlink transmission slots, or downlink slots and flexible slots.

30. The method according to claim 28, wherein the plurality of slots are consecutive or non-consecutive in the time domain, and in the case of being non-consecutive, gaps between the plurality of slots are the same or different,

wherein in a case that the gaps between the plurality of slots are the same, a position of each slot is determined according to a slot offset of a starting slot and slot offsets of adjacent slots or a slot gap;
in a case that the gaps between the plurality of slots are different, the position of each slot is determined according to a slot offset of each slot, or determined according to the slot offset of the starting slot and slot offsets of other slots relative to the starting slot.

31. The method according to claim 28, wherein the plurality of slots comprise at least one slot group, the at least one slot group is used for hopping transmission of the positioning reference signal resource between slots, and adjacent slot groups in the time domain have a gap with a length not less than the switching time between hops,
wherein each slot group comprises at least one slot, the at least one slot is arranged sequentially, and the number of the at least one slot is indicated by a network-side device, and/or agreed by a protocol, and/or selected by a terminal.

32. The method according to claim 31, wherein the positioning reference signal resource does not undergo hopping transmission between slots in at least one of the following cases:

the number of slots in one slot group is the same as the number of slots of the positioning reference signal resource in one cycle;
the positioning reference signal resource comprises one slot group in one cycle;
the slot group is not configured or defined.

33. The method according to claim 31, wherein time-frequency mapping patterns within slots of a plurality of slots in one slot group are the same.

34. The method according to claim 31, wherein
slot distributions of the plurality of slot groups are the same, and a time domain position of each slot in the plurality of slot groups is determined according to a gap between slots within each slot group and a gap between slot groups.

35. The method according to claim 31, wherein the method further comprises:
determining, by the communication device, a hop count between slots according to at least one of the number of slots in the slot group, a slot number within the positioning reference signal resource, and a slot group number, the hop count between slots being used for determining a positioning reference signal narrowband corresponding to each hopping transmission.

36. The method according to claim 28, wherein the method further comprises:
in a case that the positioning reference signal resource is configured with frequency hopping within slots and the positioning reference signal resource comprises a plurality of slots, performing, by the communication device, frequency hopping within slots and between slots according to a symbol distribution of the positioning reference signal resource within each slot.

37. The method according to claim 36, wherein the symbol distributions of the positioning reference signal resource within the plurality of slots are the same.

38. The method according to claim 36, wherein the method further comprises:
determining, by the communication device, the symbol distributions of the positioning reference signal resource within the plurality of slots according to symbol groups and a gap between the symbol groups.

39. The method according to claim 38, wherein determining, by the communication device, the symbol distributions of the positioning reference signal resource within the plurality of slots according to symbol groups and a gap between the symbol groups comprises:
determining, by the communication device, positions of symbol groups within a current slot and other slots according to a position of a first symbol group of the positioning reference signal resource within a first slot and the gap between the symbol groups.

40. The method according to claim 39, wherein
in two adjacent slots for transmitting the positioning reference signal, a gap between a first symbol of the positioning reference signal resource within a later slot and a last symbol of the positioning reference signal resource within an earlier slot is equal to the gap between the symbol groups and not less than the switching time between hops.

41. The method according to claim 39, wherein according to a symbol group gap, in a case that the determined first symbol group is located within the first slot and a second slot, the method further comprises any one of:

transmitting the first symbol group according to the symbol distributions of the first symbol group within the first slot and the second slot;
transmitting the first symbol group at a starting symbol of the second slot;
transmitting the first symbol group at a third symbol of the second slot, a position of the third symbol being the same as a position of a first symbol for transmitting the positioning reference signal resource within the first slot;
transmitting the first symbol group at a fourth symbol of the second slot, a position of the fourth symbol being the same as the position of the first symbol for transmitting the positioning reference signal resource within the first slot of the positioning reference signal resource;
transmitting the first symbol group as indicated by a network-side device or agreed by a protocol.

42. The method according to claim 36, wherein the method further comprises:
determining, by the communication device, hop counts within slots and between slots according to at least one of the number of symbols in the symbol group, a symbol number within the positioning reference signal resource, a symbol group number, the number of slots in the slot group, a slot number within the positioning reference signal resource, and a slot group number.

43. The method according to claim 42, wherein the communication device determines the hop counts within slots and between slots through the following formula:

$$n_{slot} = \left\lfloor l' / N_{symb}^{group} \right\rfloor + n' * N_{symb} / N_{symb}^{group},$$

wherein $l'$ is the symbol number within the positioning reference signal resource, $l' \in \{0, 1, ..., N_{symb}-1\}$, $N_{symb}$ is the number of symbols of the positioning reference signal resource within one slot, $N_{symb}^{group}$ is the number of symbols in the symbol group, n' is the slot number within the positioning reference signal resource, n' E $\{0, 1, ..., N_{slot}-1\}$, and $N_{slot}$ is the number of slots occupied by the positioning reference signal resource.

44. An apparatus for transmitting a positioning reference signal resource, comprising:

a transmission module, configured to send or receive a positioning reference signal resource, symbols occupied by the positioning reference signal resource within a slot comprising at least one symbol group, each symbol group comprising one or more consecutive symbols,
wherein the at least one symbol group is used for hopping transmission of the positioning reference signal resource, a gap symbol is comprised between adjacent symbol groups in a time domain, the gap symbol is not used for transmitting the positioning reference signal resource, and the length of the gap symbol is not less than switching time between hops.

45. A communication device, comprising a processor and a memory, the memory storing a program or instruction runnable on the processor, the program or instruction, when executed by the processor, implementing the steps of the method for transmitting the positioning reference signal resource according to any one of claims 1 to 43.

46. A readable storage medium, the readable storage medium storing a program or instruction, the program or instruction, when executed by a processor, implementing the steps of the method for transmitting the positioning reference signal resource according to any one of claims 1 to 43.

RE for transmitting
positioning reference
signal resource

# FIG. 1(a)

RE for transmitting
positioning reference
signal resource

# FIG. 1(b)

RE for transmitting
positioning reference
signal resource

FIG. 1(c)

RE for transmitting
positioning reference
signal resource

FIG. 1(d)

12

Network-side
device

11

11

Terminal

Terminal

FIG. 2

300

A communication device sends or receives a positioning reference signal
resource, symbols occupied by the positioning reference signal resource within a
slot including at least one symbol group, each symbol group including one or
more consecutive symbols, where the at least one symbol group is used for
hopping transmission of the positioning reference signal resource, there are gap
symbols between adjacent symbol groups in a time domain, the gap symbols are
not used for transmitting the positioning reference signal resource, and the length
of the gap symbols is not less than frequency hopping switching time

~S302

FIG. 3

RE for transmitting positioning reference signal resource

Gap duration (gap symbol)

FIG. 4(a)

RE for transmitting positioning reference signal resource

Gap duration (gap symbol)

FIG. 4(b)

Apparatus 500

Transmission module ～ 501

## FIG. 5

600

Communication device

601 ～ Processor ⇄ Memory ～ 602

## FIG. 6

700

701 ～ Radio frequency unit

702 ～ Network module

710 ～

709 ～ Memory
Application program
Operating system

703 ～ Audio output unit

708 ～ Interface unit

Processor

704
Input unit
Graphics processing unit ～ 7041
Microphone ～ 7042

707 ～
User input unit
7071 ～ Touch panel
7072 ～ Other input device

706
Display unit 7061
Display panel

Sensor ～ 705

## FIG. 7

FIG. 8

## INTERNATIONAL SEARCH REPORT

| International application No. |
| --- |
| **PCT/CN2023/141511** |

### A. CLASSIFICATION OF SUBJECT MATTER

H04L5/00(2006.01)i; H04W72/04(2023.01)i

According to International Patent Classification (IPC) or to both national classification and IPC

### B. FIELDS SEARCHED

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNABS, VEN, CNTXT, ENTXT, ENTXTC, CJFD, 3GPP: 定位参考信号, 位置参考信号, 参考信号, 探测参考信号, 时隙, 符号, 符号组, 连续, 跳频, 切换, 时域, 相邻, 间隔, 映射, 位图, 重复, 次数, 偏移, position+ reference signal, PRS, RS, SRS, time slot, symbol, symbol group, successive, frequency hop+, switch+, time domain, adjacent, interval, map+, bitmap, repetition, number, offset

### C. DOCUMENTS CONSIDERED TO BE RELEVANT

| Category* | Citation of document, with indication, where appropriate, of the relevant passages | Relevant to claim No. |
| --- | --- | --- |
| A | CN 114830778 A (ZTE CORP.) 29 July 2022 (2022-07-29)<br>entire document | 1-46 |
| A | WO 2022068836 A1 (SPREADTRUM COMMUNICATIONS (SHANGHAI) CO., LTD.) 07 April 2022 (2022-04-07)<br>entire document | 1-46 |
| A | CN 112583564 A (VIVO COMMUNICATION TECHNOLOGY CO., LTD.) 30 March 2021 (2021-03-30)<br>entire document | 1-46 |
| A | CN 110447288 A (HUAWEI TECHNOLOGIES CO., LTD.) 12 November 2019 (2019-11-12)<br>entire document | 1-46 |
| A | WO 2022154644 A1 (LG ELECTRONICS INC.) 21 July 2022 (2022-07-21)<br>entire document | 1-46 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 March 2024** | **29 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141511**

| Patent document cited in search report | | | Publication date (day/month/year) | Patent family member(s) | | | Publication date (day/month/year) |
|---|---|---|---|---|---|---|---|
| CN | 114830778 | A | 29 July 2022 | None | | | |
| WO | 2022068836 | A1 | 07 April 2022 | None | | | |
| CN | 112583564 | A | 30 March 2021 | None | | | |
| CN | 110447288 | A | 12 November 2019 | WO | 2018171754 | A1 | 27 September 2018 |
| | | | | EP | 3592069 | A1 | 08 January 2020 |
| | | | | EP | 3592069 | A4 | 12 August 2020 |
| | | | | EP | 3592069 | B1 | 01 June 2022 |
| | | | | US | 2020022127 | A1 | 16 January 2020 |
| | | | | US | 11064465 | B2 | 13 July 2021 |
| | | | | US | 2021377929 | A1 | 02 December 2021 |
| | | | | US | 11765725 | B2 | 19 September 2023 |
| WO | 2022154644 | A1 | 21 July 2022 | EP | 4280761 | A1 | 22 November 2023 |
| | | | | KR | 20230133291 | A | 19 September 2023 |

Form PCT/ISA/210 (patent family annex) (July 2022)

**REFERENCES CITED IN THE DESCRIPTION**

**Patent documents cited in the description**

- CN 202211686605